# EUROPEAN PATENT APPLICATION

(11) **EP 1 039 401 A2**
(43) Date of publication of application: **27.09.2000**
(21) Application number: 00200914.0
(22) Date of filing: 14.03.2000
(51) Int. Cl.: G06F 17/60, G06F 1/00

(54) **System and method for validating and measuring effectiveness of information security programs**

(30) Priority: 19.03.1999 US 125298 P
(71) Applicant: CITIBANK, N.A., New York, New York 10043 (US)
(72) Inventor: Teller-Kanzler, Jeri, Edison, New Jersey 08820 (US); Dunbar, Thomas, Colonia, New Jersey 07067 (US)
(74) Representative: Hynell, Magnus

(57) **Abstract**

A system and method for validating and measuring the effectiveness of information security programs and services provides an automated tool set for inputting and transmitting security measurements that enables a standard metric relating to specific information security programs, utilizing system software and a graphical user interface that works in conjunction with the system software to input data and to provide the user with reports. The user is provided with a snapshot view or status of the information security of an organization, for example, by business group, as well as reports on local business, country, and group levels.

## Description

### Cross Reference to Related Patent Application

This patent application claims priority to applicant's co-pending United States Provisional Patent Application Serial No. 60/125,298, entitled "System and Method for Validating and Measuring Effectiveness of Information Security Programs," filed March 19, 1999, which is hereby incorporated in full by reference.

### Field of the Invention

The present invention relates to information security ("IS") programs. In particular, the present invention relates to a system and method for validating and measuring the effectiveness of information security programs.

### Background of the Invention

Information security includes the practice of protecting information from accidental or malicious modification, destruction, disclosure, or denial of service. While similar to data security, information security is broader in scope, in that it encompasses both electronic and non-electronic information. In the information security field, it is very difficult to measure the effectiveness of information security programs. Many companies, large and small, employ various kinds of information security programs, such as installing security products on their desktop computers and writing security policies and standards. Companies perform many different types of security activities and services to ensure that an information environment, such as a technology information environment or a desktop computer environment, is secured and trusted.

While many companies have implemented information security programs over the past several years, such companies have no effective method to determine whether and how the programs impact the security of their information. They have no effective method to prove, for example, to senior management that such security programs have been implemented and their impact. For example, if a technology administrator is given a software diskette and instructed to install the diskette on everyone's workstation in a large corporation, it is impossible to be certain that the instruction has been carried out for all workstations, especially for anti-virus software and the like. Likewise, it is very difficult to measure the impact of information security programs, i.e., whether or not various programs are effective.

A system and method is needed to allow validation and measurement of the effectiveness of information security programs.

### Summary of the Invention

The present invention provides systems and methods for validating and measuring the effectiveness of information security programs. One embodiment provides a method for managing information security. Such a method may comprise determining information security data of interest, gathering and receiving information security status data related to security data of interest, calculating summary information security data, and generating an information security report having summary information security data. In an embodiment, information security status data is gathered from at least two levels of an organization, and two information security reports are generated.

There are several ways in which information security status data (also called information security metrics data) may be gathered. In one embodiment, a survey is conducted. Such a survey may occur at one, or more than one, level of an organization. Gathering such data may first involve deciding the data (or types of data) that is needed or desired. Such a decision may be made by, for example, a corporate entity within an organization that has responsibility for information security management for the organization. Such decisions may be made dynamically. That is, the choice of data (or types of data) may be altered on occasion.

Information security data of interest may be determined in several ways. For example, such data may be determined by examining previously gathered information security status data. As another example, such data may be determined by determining information security metrics goals data that includes, for example, the desired information security data goals of an organization.

Generating an information security report, for example an executive information security report, may involve the determination of needed or related data. For example, in one embodiment, such generating involves determining people management data. Other embodiments such generating may involve determining information security gap analysis data, risks section data, or other types of data.

Moreover, gathering information security data may comprise receiving various types of needed or related data. For example such gathering may involve receiving information security training data, information security awareness data, information security risk data, information security vulnerability data, information security control data, or other types of data.

Embodiments according to the present invention also include systems for managing information security. Such systems may comprise an information security metrics data determination system, an information security status data gathering system, a summary information security data calculation system, and an information security report generation system. In an embodiment, the information security report generation system is in communication with the summary information security data calculation system. Such systems are programmed to carry out their corresponding functions discussed above.

Embodiments of the present invention also include methods for validating and measuring the effectiveness of one ore more information security programs of an organization having a plurality of business levels. The method may comprise one or more steps. In one embodiment, a first survey form is distributed to a first one of the plurality of business levels in the organization, and the first business level completes the first survey form indicative of a degree of implementation of an information security program (or programs). Then, a first database report summarizing data accumulated from the completed first survey form is generated. A second survey form (preferably a questionnaire form) is distributed to a second one of the plurality of business levels in the organization, and the second business level completes the questionnaire form based on data provided by the second business level and data accumulated from the completed first survey form. A questionnaire in such an embodiment may be, for example, a type of survey that requests data from an individual based on earlier-compiled data available to the individual. Then, a second database report is generated summarizing data accumulated from the completed questionnaire form. Based on at least the second database report, the effectiveness of the at least one information security programs is evaluated and determined.

Embodiments of a system according to the present invention include a system for managing information security. An embodiment of such a system may include an information security status data receiver comprising network elements, e.g., two computers, associated with at least two levels of an organization, and a summary information security data calculator in communication with the receiver. The system may also include an information security report generator in communication with the summary information security data calculator. An example of such calculators and generators comprises a networked computer.

Embodiments also include a system for evaluating an information security program. Such systems may comprise a first-level information security status data receiver associated with a first level of an organization, and a first-level summary information security data calculator in communication with the first-level information security status data receiver. Such a system may further comprise a first-level information security report generator in communication with the first-level summary information security data calculator. Such a system may also include portions associated with the second-level of the organization. For example, such a system may include a second-level information security status data receiver associated with a second level of the organization, and a second-level summary information security data calculator in communication with the second-level information security status data receiver, and a second-level information security report generator in communication with the second-level summary information security data calculator.

Embodiments according to the present invention provide several advantageous features. Embodiments allow measurement of the effectiveness of information security programs. Organizations may use embodiments of the present invention to determine the impact of various investments in information security.

It is a feature and advantage of the present invention to provide a system and method for validating and measuring the effectiveness of information security programs and services with an automated tool set for inputting and transmitting information security measurements.

It is another feature and advantage of the present invention to provide an information security program effectiveness validating and measuring system and method which enables a standard metric relating to specific information security programs.

It is still another feature of the present invention to provide system software that is easy and intuitive for a user to use and a graphical user interface (GUI) that works in conjunction with the system software to prompt the user to input data and to provide the user with reports.

It is a further feature and advantage of the present invention to provide an information security program effectiveness validating and measuring system and method which gives a snapshot view or status of the state of information security by business group within an organization, as well as for the organization as a whole.

It is an additional feature and advantage of the present invention to provide an information security effectiveness validating and measuring system and method which allows for reporting on local business and country, as well as group levels.

### Brief Description of Figures

FIG. 1 shows an example of an organizational structure in which embodiments of the present invention may be used.
FIG. 2 comprises a flow-diagram showing an embodiment of the present invention.
FIG. 3 comprises a flow-diagram showing an embodiment of receiving security status data according to the present invention.
FIG. 4 comprises a flow-diagram showing an embodiment of generating an information security report according to the present invention.
FIGS. 5-50 show web-based pages embodying an example of gathering and receipt of first-level information security status data according to the present invention in the form of a BISO survey.
FIGS. 51-85 show web-based pages embodying an example of gathering and receipt of second-level information security status data according to the present invention in the form of a GISO survey (or GISO questionnaire).
FIGS. 86-95 show web-based pages embodying an example of a first-level information security report according to the present invention in the form of a BISO report.
FIG. 96 shows a web-based page embodying an example of a second-level information security report according to the present invention in the form of an executive vice president report.
FIG. 97 shows an example of a system according to the present invention in the form of a computer network.
FIGS. 98-110 show pages from another embodiment of a BISO survey.
FIGS. 111-124 show pages from another embodiment of a GISO questionnaire.

### Detailed Description

Embodiments of the present invention include systems and methods for validating and measuring effectiveness of information security programs. Such systems and methods include methods for managing information security. Further description of the present invention is provided below with reference to the figures provided.

To ease understanding of the present invention, the detailed description below is organized to first provide an overview of an organizational structure in which embodiments of the present invention may be implemented. Then, an overview of a method and system in accordance with the present invention is provided. Next, a detailed description of an example of a method and system in accordance with the present invention is provided.

Embodiments according to the present invention may be implemented in organizations of a wide variety of sizes and structures. Examples of embodiments of the present invention are provided herein with reference to an example enterprise having several levels of management. The example organizational structure is used herein to demonstrate the use of embodiments of the present invention.

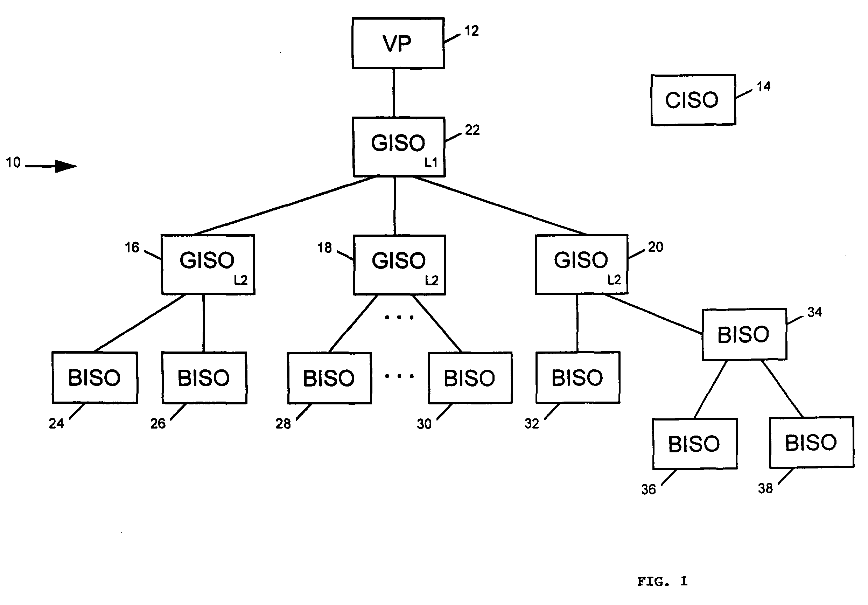

FIG. 1 shows part of an organizational structure 10 within an organization in which embodiments of the present may be implemented. The organization includes an executive vice president 12, four group information security officers (GISOs) 16, 18, 20, 22, and several business information security officers (BISOs) 24, 26, 28, 30, 32, 34, 36, 38. The organization also includes a corporate information security office (CISO) 14.

The CISO has responsibility for a wide variety of information security functions. Among them, the CISO is responsible for defining and maintaining an information security metrics program for use by business units, designing an automated tool set for collecting information security metrics on a business-wide basis, and providing the needed software and training. The CISO is also responsible for information security (for example corporate-wide policies on information security), for developing a metrics data repository for functions such as report generation, and for maintaining systems in accordance with company policies. The CISO includes computer systems for carrying out various functions in relation to information security, including gathering data, making calculations and determinations, and other computerized functions.

GISOs and BISOs are assigned responsibility for ensuring that corporate information security programs and services are introduced and implemented within their respective business groups, and work in association with the CISO. Three of the GISOs 16, 18, 20 work in separate business groups within the organization. These "Level 2" GISOs report to a "Level 1" GISO 22. The GISOs are assigned responsibility for ensuring that corporate information security programs and services are introduced and implemented within their respective business groups. GISOs' responsibilities also include managing the distribution and collection of BISO metrics surveys, assigning BISO identification numbers to the BISOs, and carrying out various other functions related to the information security systems.

BISOs work within the business groups and are generally responsible for day-to-day information security in their group(s). The BISOs are also assigned responsibility for ensuring that corporate information security programs and services are introduced and implemented within their respective business groups. BISOs may be assigned to one or more specific business units within a business group. BISOs are often assigned more-specific, daily responsibilities, while GISOs often perform supervisory, policy, and management responsibilities. BISOs report to GISOs within their business group. In some business groups, there are more than one level of BISO. For example, in the structure shown 10, one BISO 34 is reported to by two other BISOs 36, 38. BISOs have responsibility for completing various BISO metrics survey forms and transmitting resulting data to their supervising GISO.

The mission of the CISO 14 is to create a secure culture within an organization in which information security is an integral part of each business's management process and is a fundamental part of normal business procedures and practices. The CISO 14 manages the organization's information security program and related programs.

The GISOs 16, 18, 20 report to a GISO 22. The "Level 1" GISO 22 reports to the executive vice president 12. The vice president 12 is responsible for the business units to the upper management of the organization for various aspects of the business group in which the GISOs and BISOs work, including information security aspects and compliance with policies produced by the CISO. It is desirable for the group vice president to have data regarding information security aspects of the group vice president's group. Embodiments of the present invention are used to provide such data in an usable form for assisting in the management of information security.

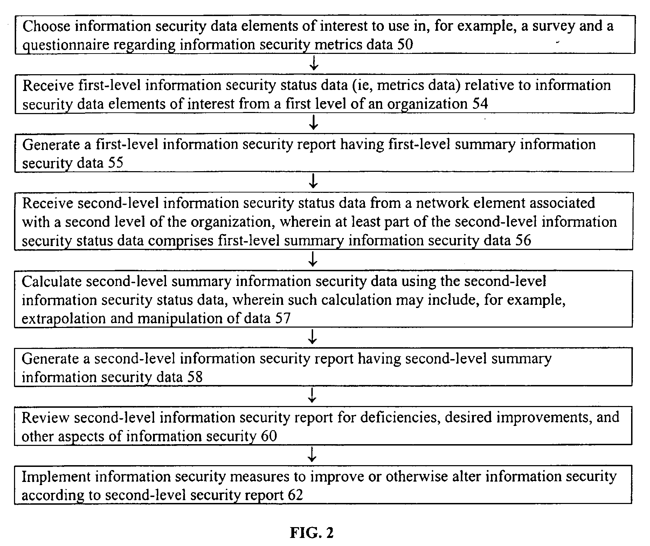

Embodiments of the present invention includes a method for managing information security. The CISO administers many of the functions related to the embodiment shown. In an embodiment, referring to FIG. 2, the CISO chooses information security metrics data, including determining information security data elements of interest 50. These elements comprise categories of information related to information security, specific types of information related to information security, or other, related information. Such metrics data in the embodiment shown generally relates to a particular information security process, task, or service in the organization's information security program(s), such as computer-virus protection. Such metrics data comprises data which can be thought of as "measuring stick" data, and is developed by the CISO in the embodiment shown to validate and measure the effectiveness of information security programs. Examples of security data elements of interest include, for example, the number and types of awareness activities performed within a business unit, and whether or not newsletters, videos, and trifolds were used in such awareness activities. Elements that can be measured, that are reflective of the information security status of a business, that are useful in validating and measuring the effectiveness of an information security program, and that have similar qualities are preferred. Another example is metrics data relative to the number of awareness activities performed within a business unit during a quarter.

Such metrics data may be chosen by surveying the BISOs and the GISOs as to various information security inquiries. Such metrics data elements of interest may also be chosen by an administrator, generated on the basis of past information security status data, or determined in some other manner. In doing so, metrics data may be chosen by examining previously-gathered information security status data or related data. Moreover, such metrics data may be chosen by determining information security metrics goals data, such as the desired number or percentage associated with a particular security data element. Information security metrics data elements of interest may change. For example, the CISO may change the elements of interest to be inquired about on a dynamic basis.

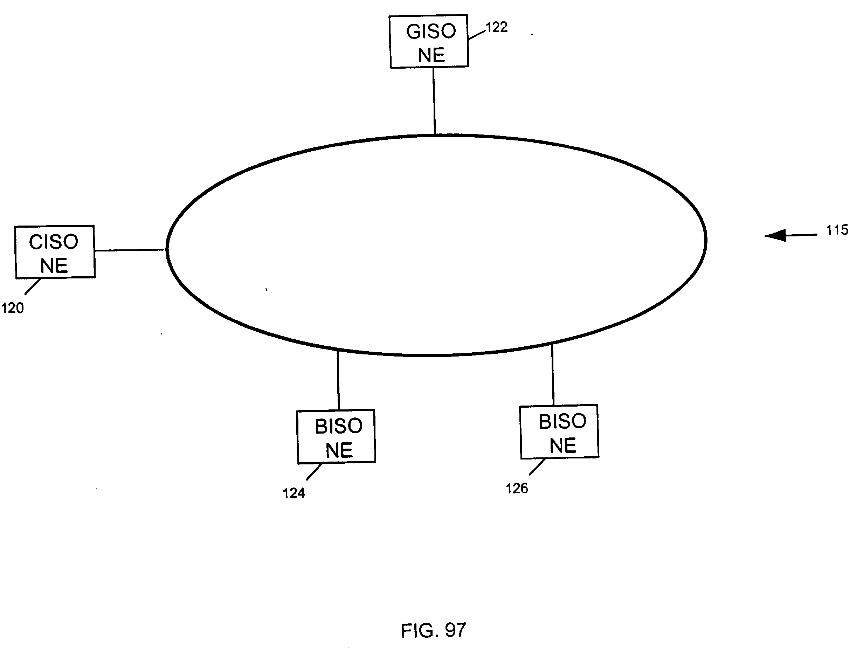

Embodiments of the present invention may be carried out using a computer network. The network includes network elements (for example, a personal computer) at various levels of the organization, including network elements with which the BISOs and GISOs have access. An example is shown in FIG. 97 and discussed further herein.

Information security status data (or "metrics data") relative to information security data elements of interest is then gathered and received via a computer network 54. Information security status data comprises data relevant to the status of information security. Typically, information security status data is data relevant to the status of information security of an organization over a pre-selected time period, e.g., the previous quarter or the previous month. Examples of information security stabs data include the status of various information security projects or programs (e.g., working, under repair, not working), dates on which information-security-related projects are completed or projected to be complete, amount and type of information security training, number of employees in a group, number of information security personnel, number of computers in a group area, number of computers with virus-detection software installed, number of computers with virus-detection software updates installed, and similar information. Data gathered from the metrics data gathering is used to evaluate particular information security processes, tasks, or service programs. Reports generated from the CISO metrics program are used by management to analyze the success of such programs and to serve as a basis for enhancing these programs, as appropriate.

Information security status data may be received in a wide variety of ways. One way in which information security status data may be received comprises gathering information by conducting a survey, such as a survey of at least two levels of an organization. For example, such a survey may be provided to BISOs and GISOs (called BISO surveys and GISO surveys (e.g., GISO questionnaires). Such a survey may be conducted using a computer network and web-based survey forms, the results of which are gathered and stored on a networked computer system. Therein, an automated tool set may be utilized for the collection of information security metrics organization-wide, and system software is provided to use the tool set. Embodiments may also include the automatic gathering of information security status data, e.g., via a computer network. In an embodiment, the results of the BISO surveys are compiled by the GISO using a computer.

Embodiments of systems and methods according to the present invention may include system software that is designed to be easy and intuitive for a user to use and a graphical user interface (GUI) that works in conjunction with the system software to prompt the user to input data and to provide the user with reports. For example, the survey forms, such as the GISO and BISO survey forms are presented to users on a computer screen, such as a personal computer (PC) monitor screen, and the GUI, in conjunction with the system software, prompts entry of the appropriate data by the users. The system automates the process, and users download the appropriate forms to their PCs, for example, from a network, such as the organization's proprietary network or the internet, complete the forms, and send the completed forms electronically to the next level. The same activities are repeated at each level, and all reports are generated automatically by the system software.

In the embodiment shown, the system receives information security status data relative to the information security data elements of interest first from one level of the organization, comprising first-level information security status data. In particular, the system receives such data from the BISO level of the organization.

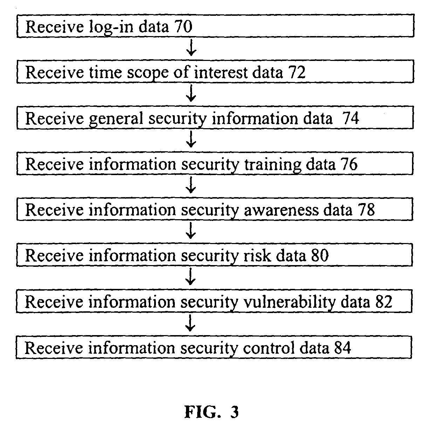

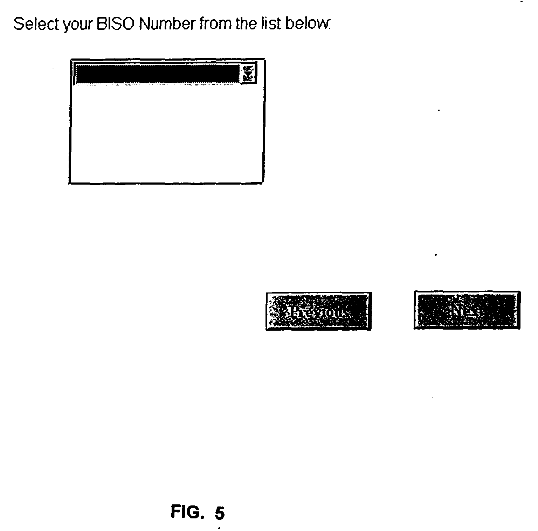

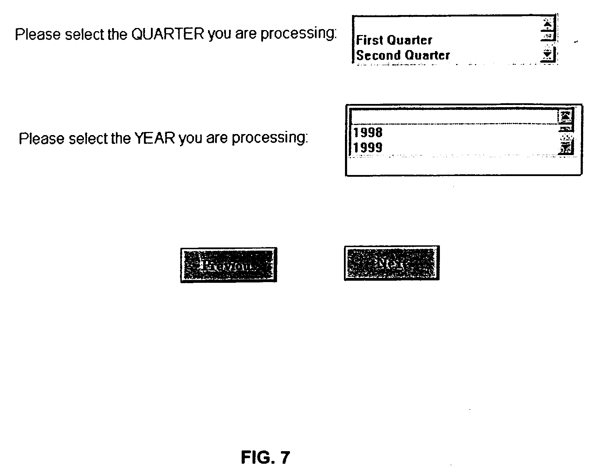

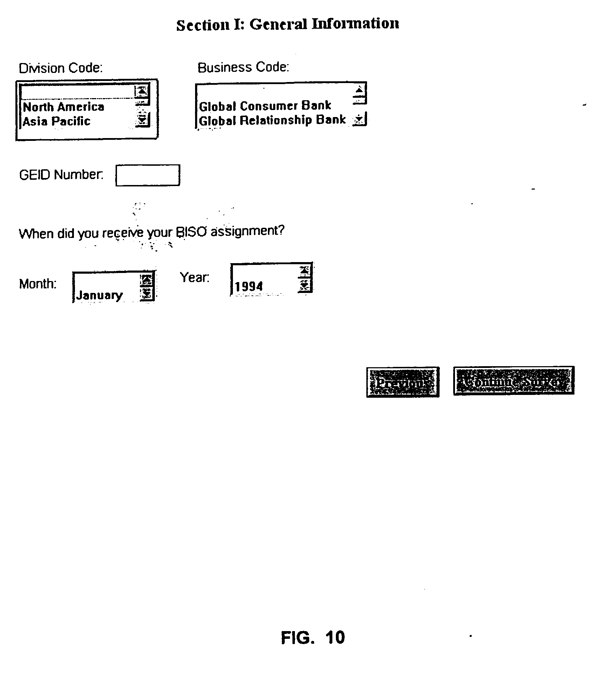

The receipt of information security status data by the system may involve various steps. For example, in the embodiment shown in FIG. 3, receiving information security data first involves receiving log-in data 70. For example, in a survey situation, the individual completing the survey (e.g., a BISO or GISO) first inputs the person's log-in data, such as a user number and password. An example is shown in FIG. 5. Next, receiving information security data comprises receiving data indicating the time scope of interest data 72 and receiving general security information data 74. The time scope of interest indicates the date range to which the later-input information relates. An example of requesting time scope of interest data is shown in FIG. 7. An example of requesting general security information data is shown in FIGS. 10-11. These examples show the requesting of such data from the BISOs. The BISOs input such data using a network element (e.g., a computer, telephone, or other data-input device) in communication with the system network. The embodiment shown in these figures is discussed in further detail below.

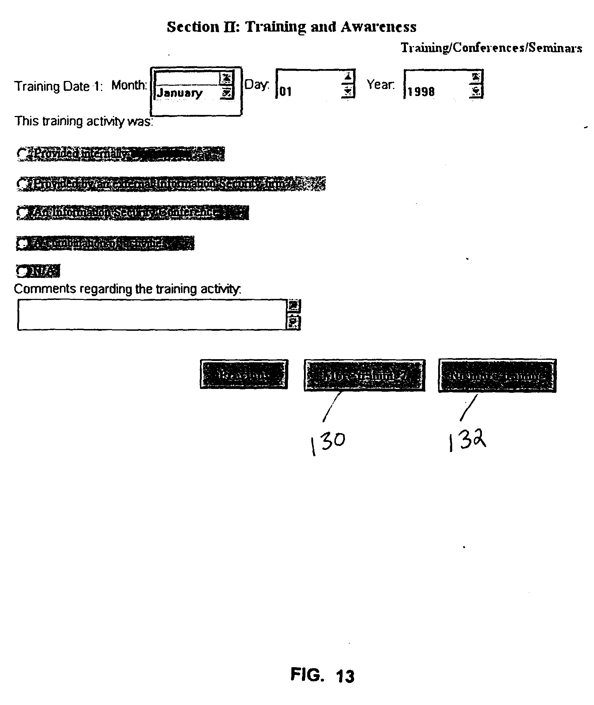

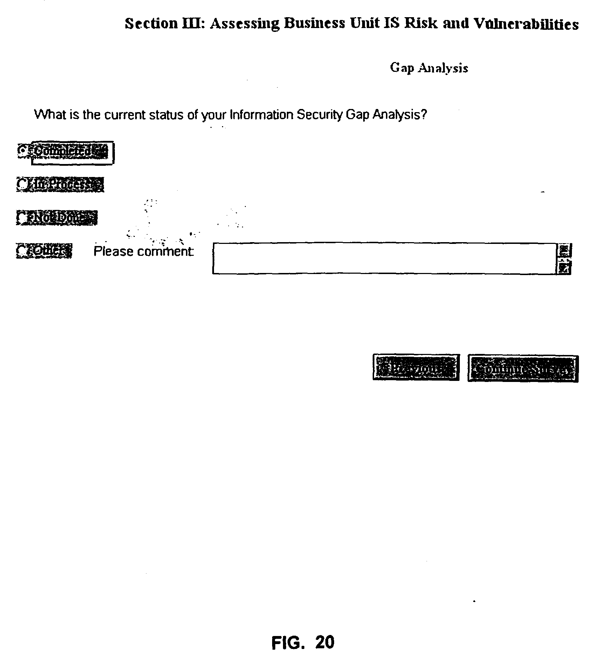

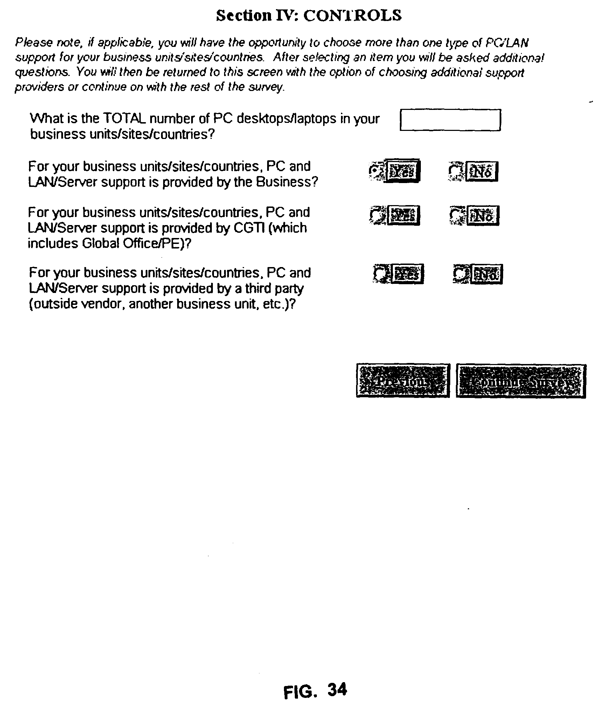

In the embodiment shown in FIG. 3, receiving information security data further comprises receiving information security training data 76, receiving information security awareness data 78, and receiving information security risk data 80. An example of requesting information security training and awareness data is shown in FIGS. 13-19. Also, in the embodiment shown in FIG. 3, receiving information security data further comprises receiving information security vulnerability data 82 and receiving information security control data 84. An example of requesting information security risk and vulnerability data is shown in FIGS 20 - 33. An example of requesting information security control data is shown in FIGS. 34-49.

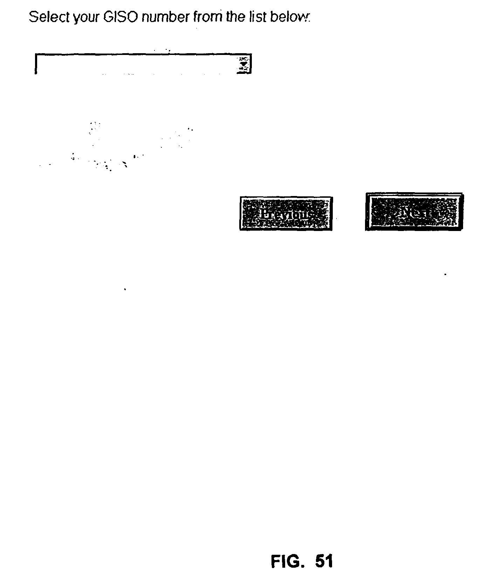

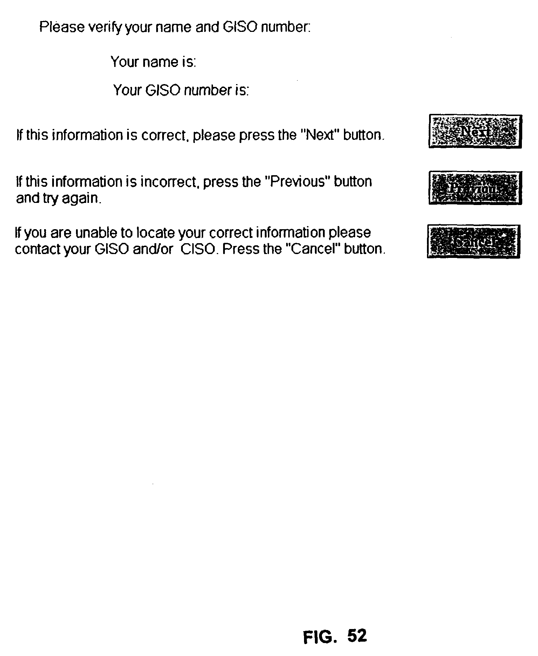

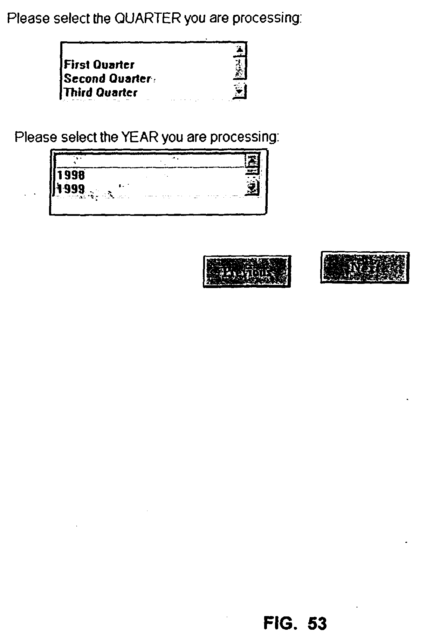

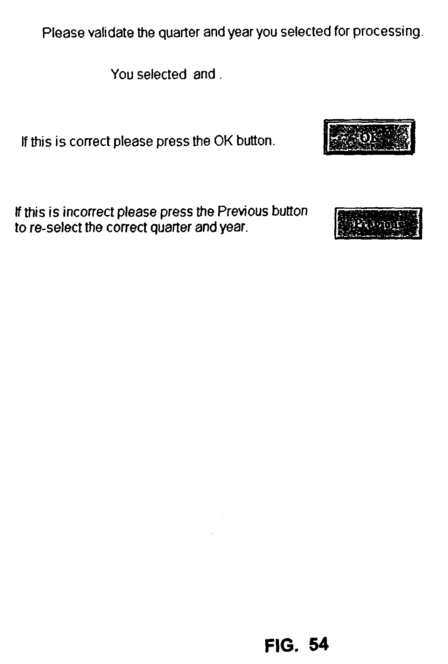

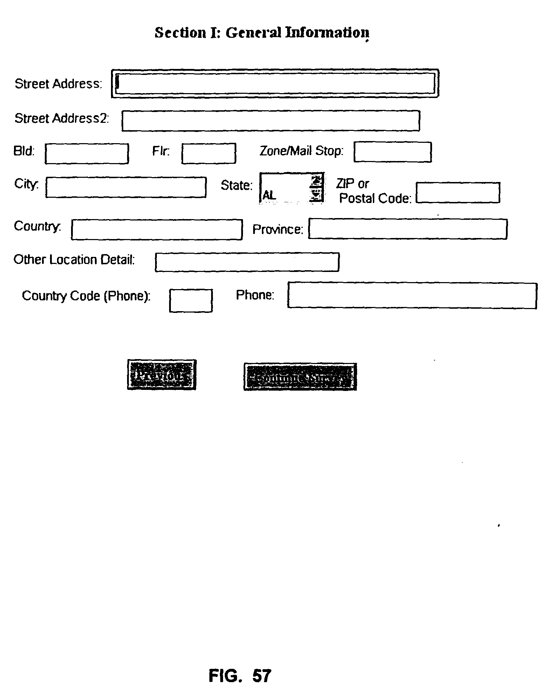

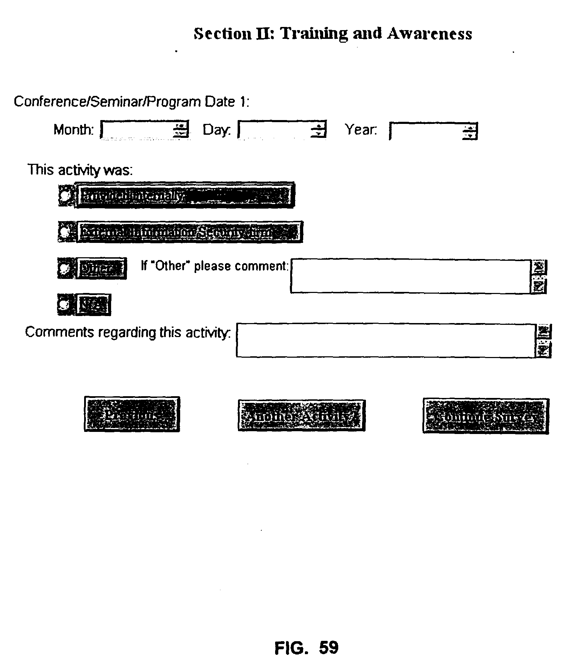

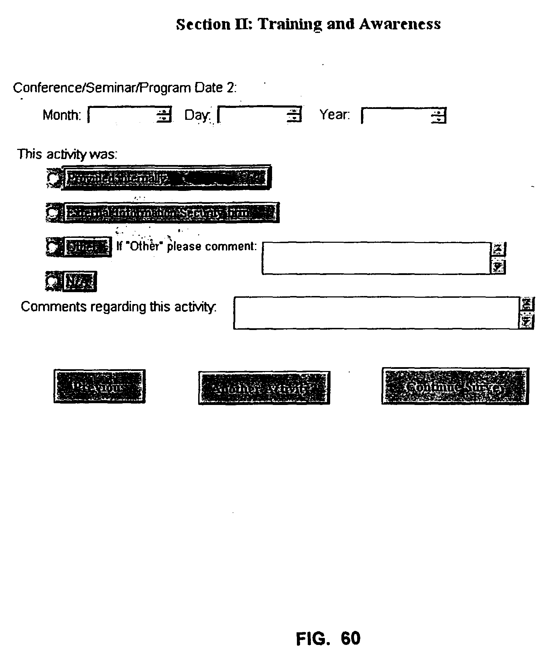

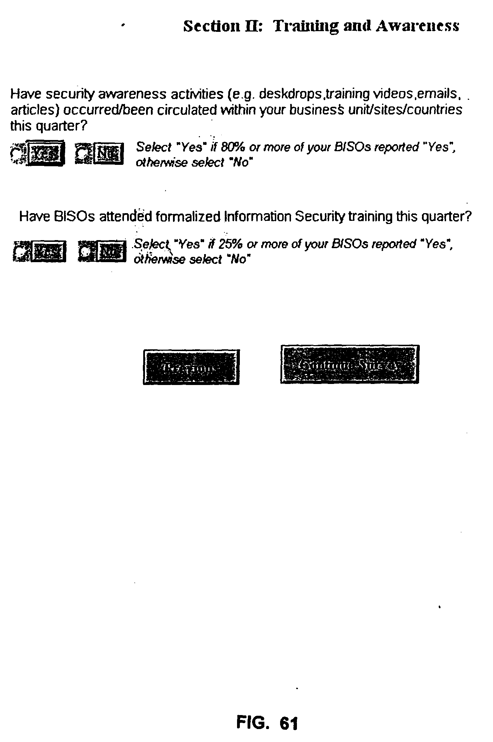

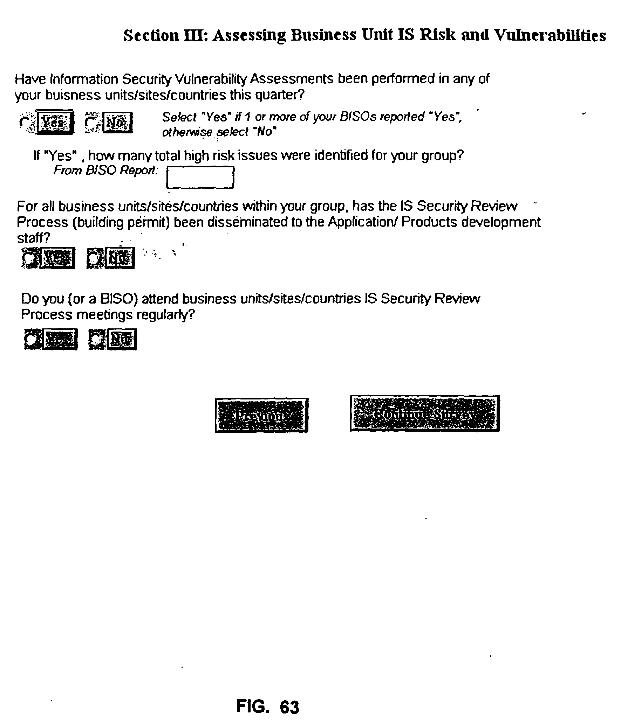

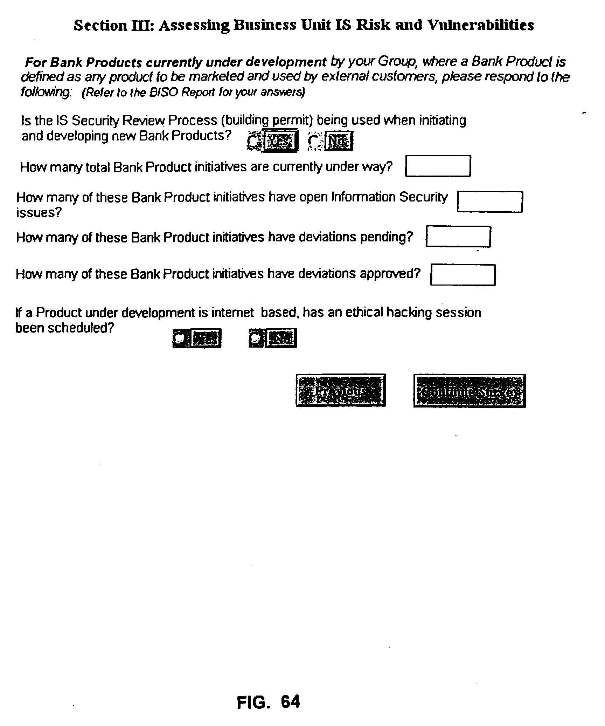

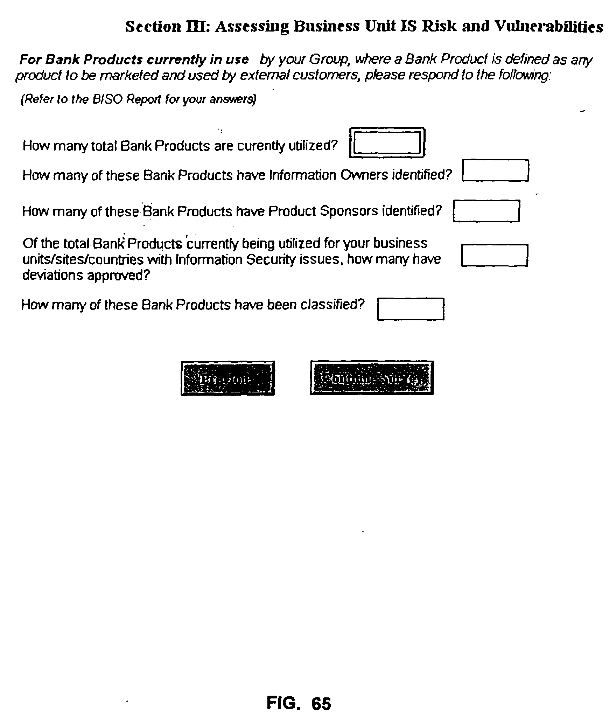

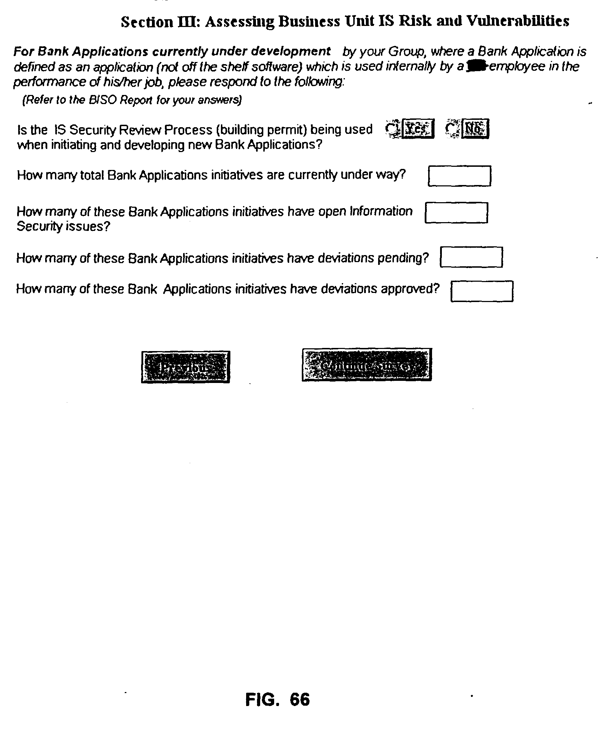

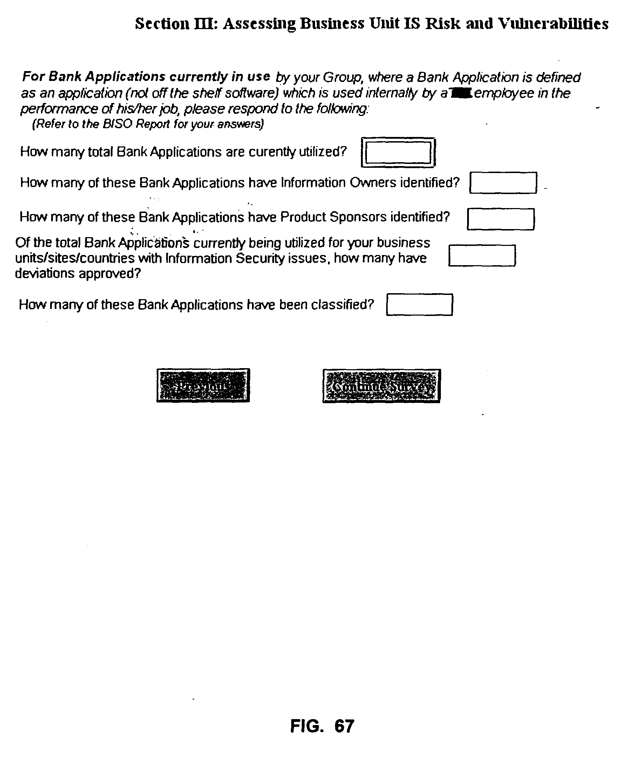

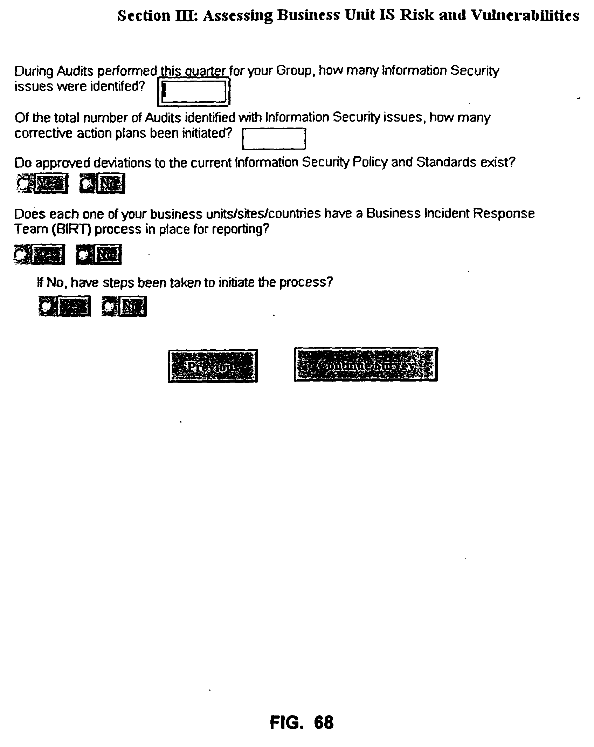

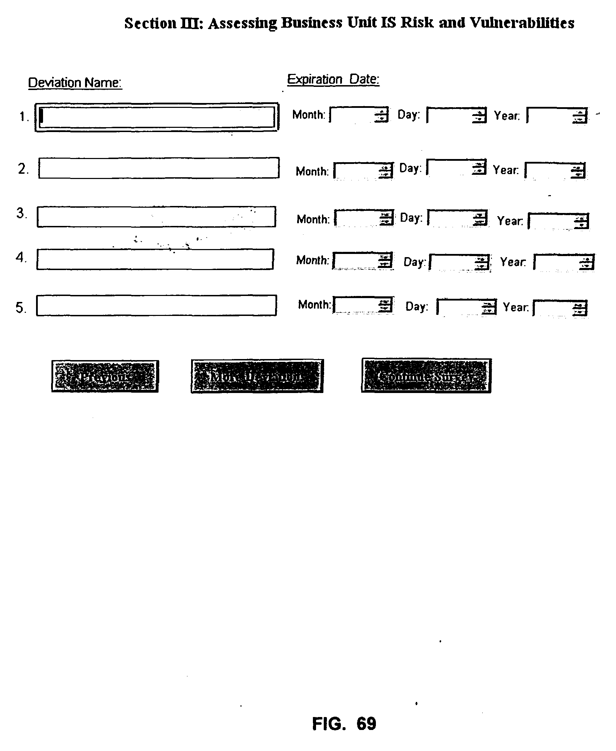

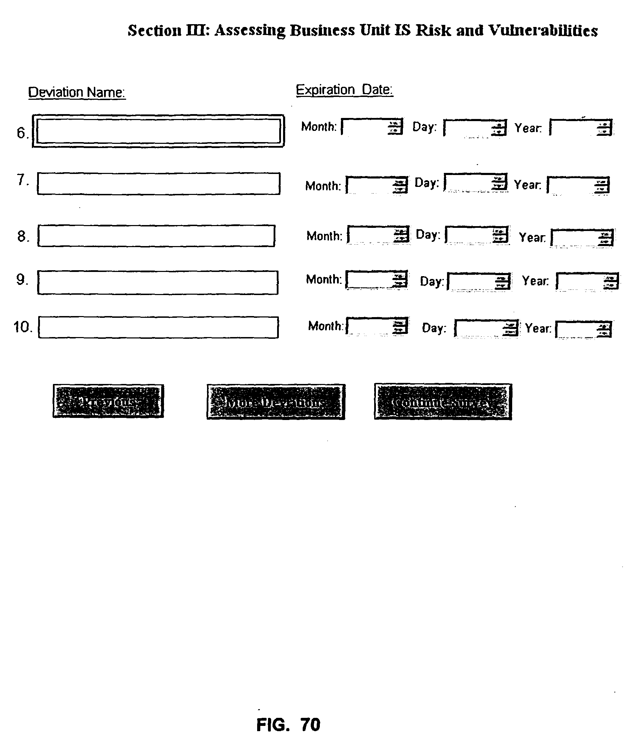

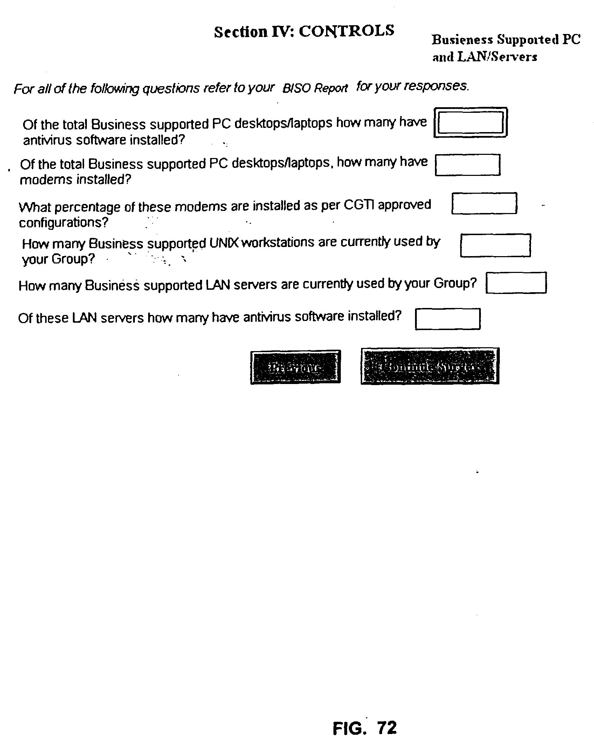

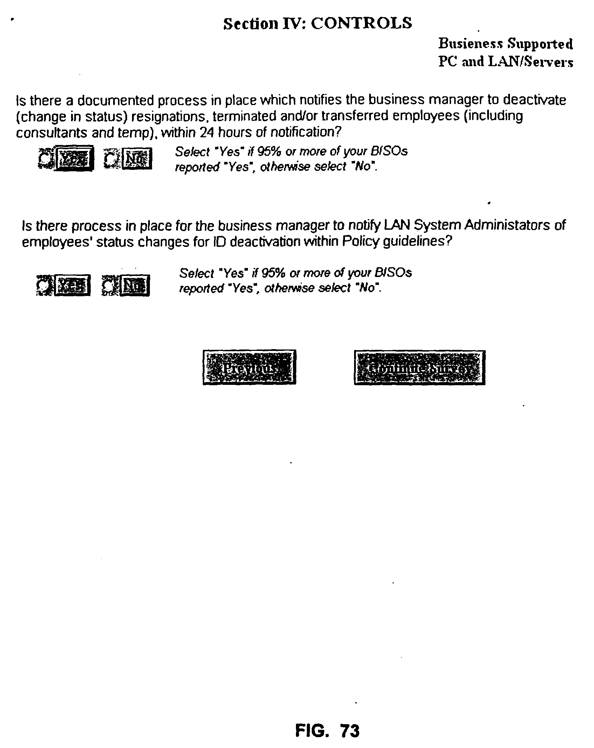

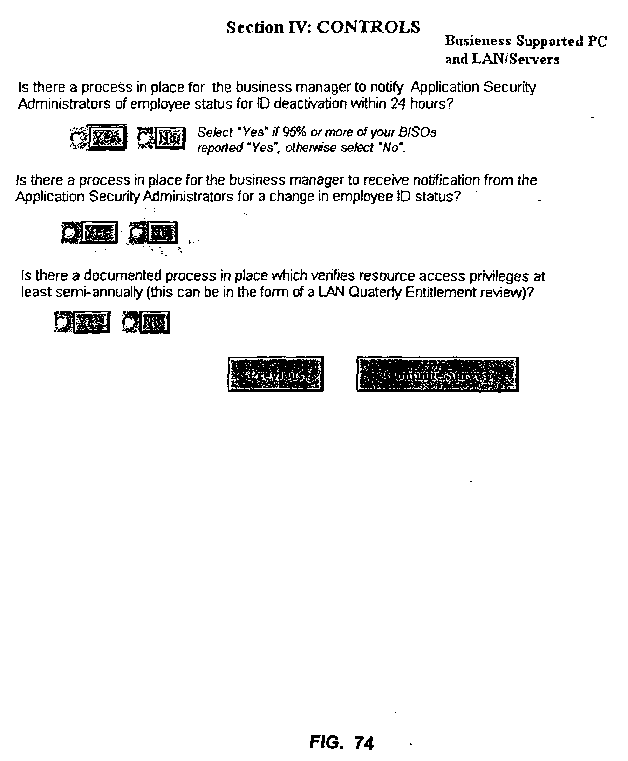

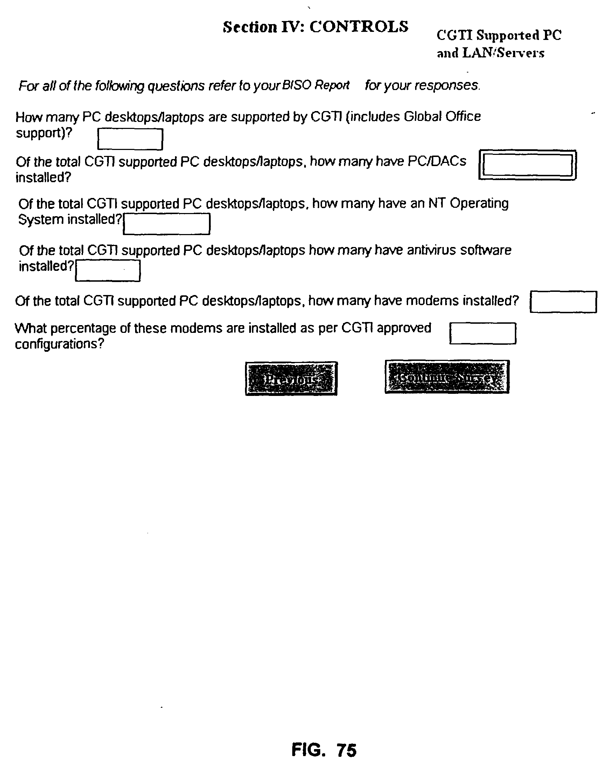

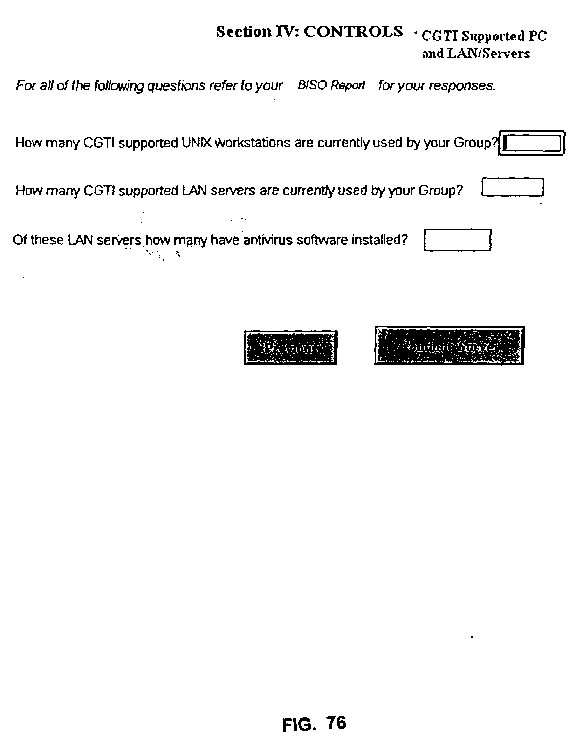

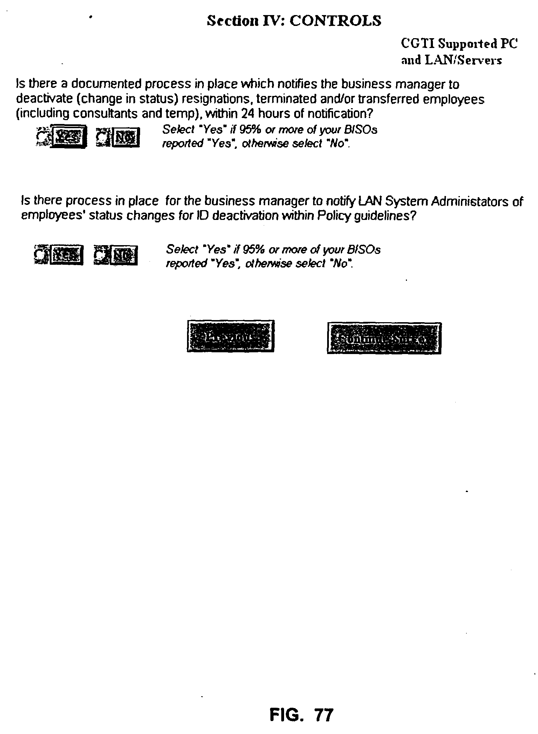

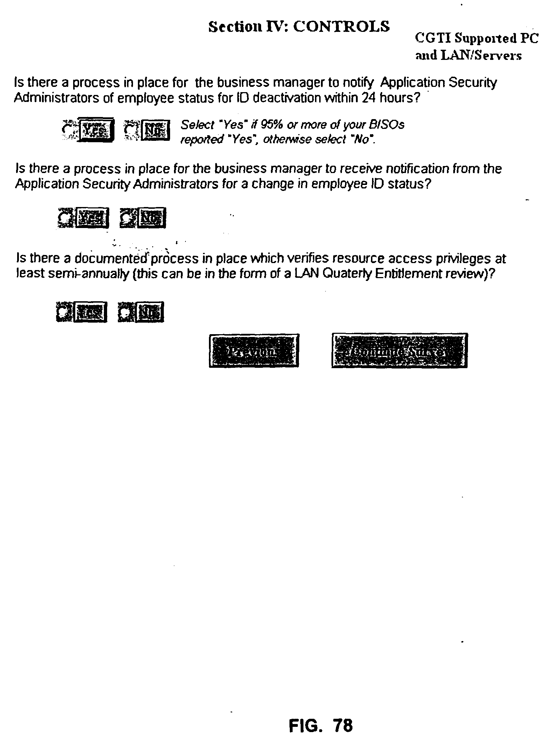

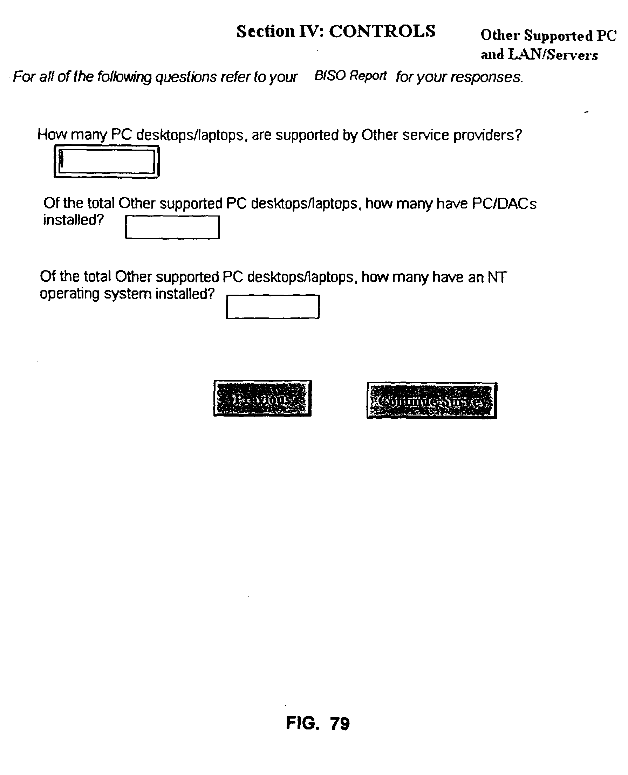

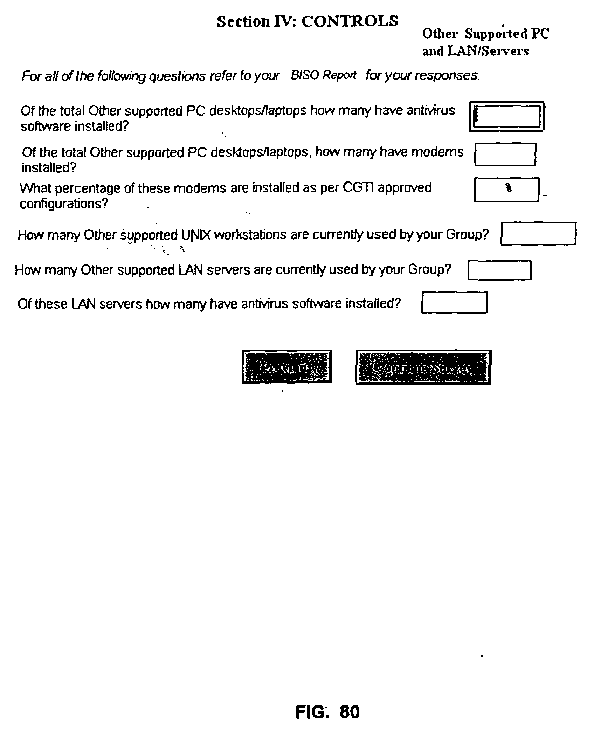

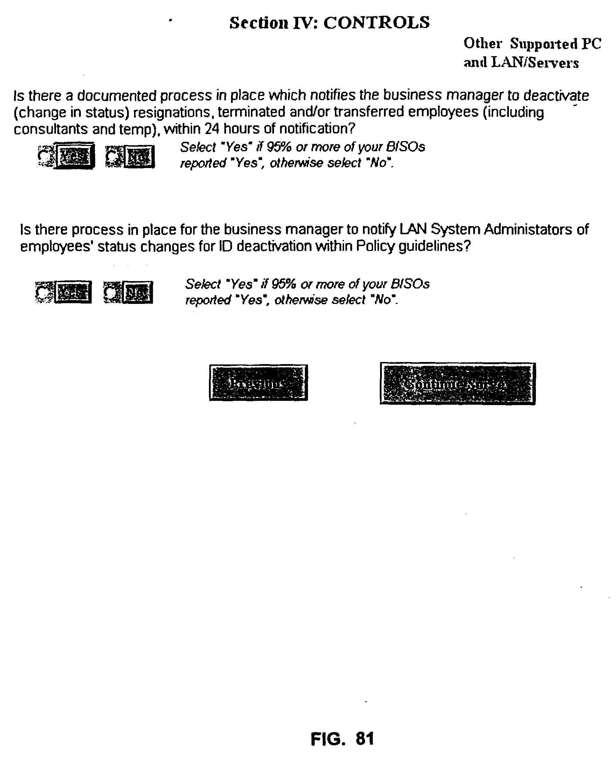

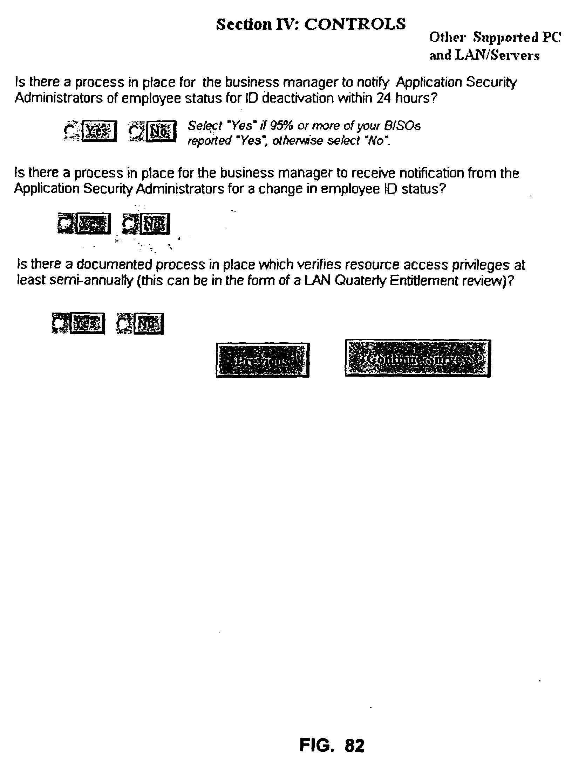

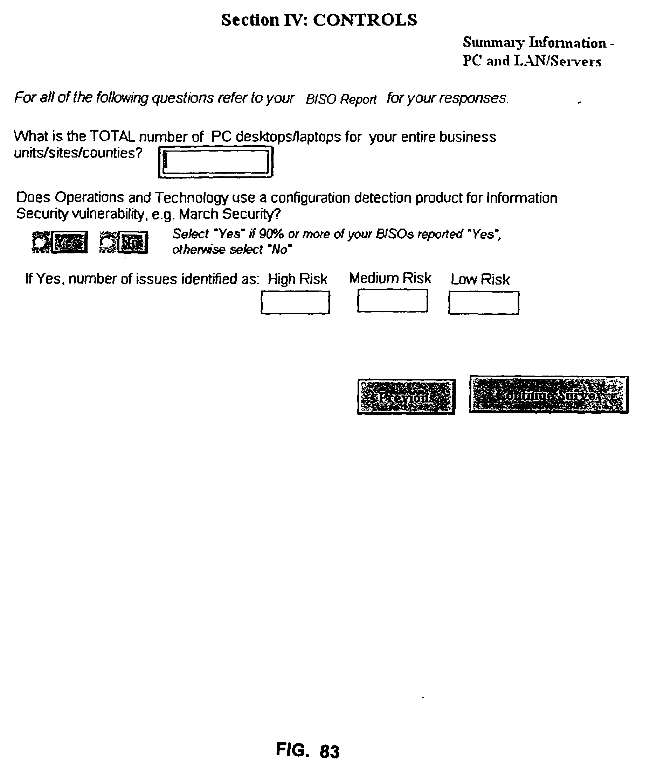

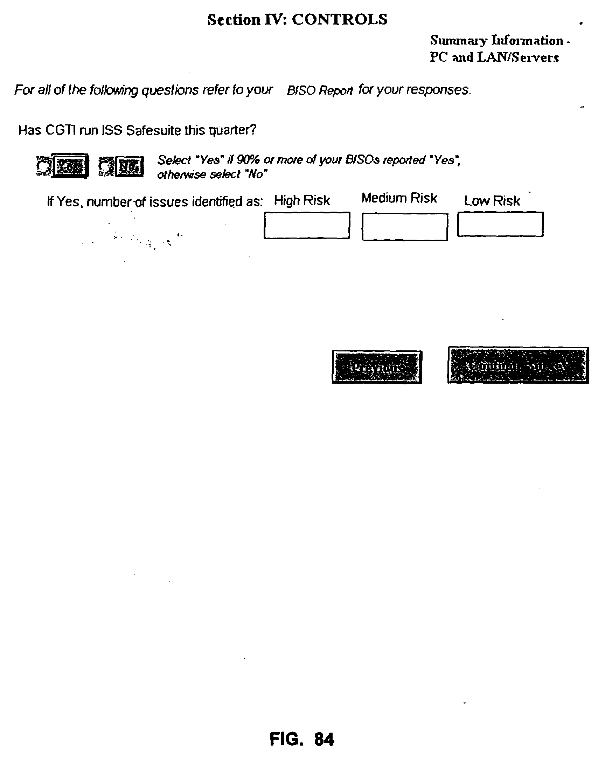

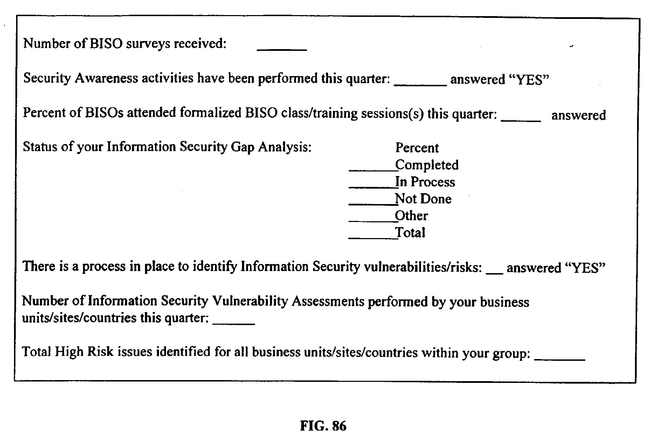

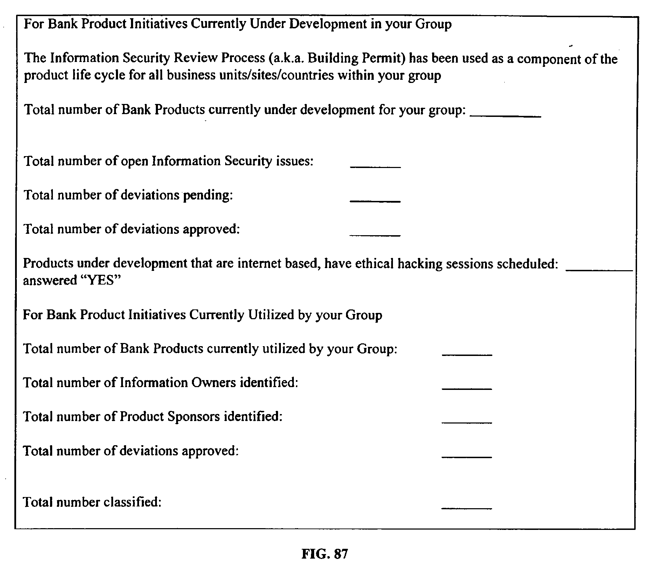

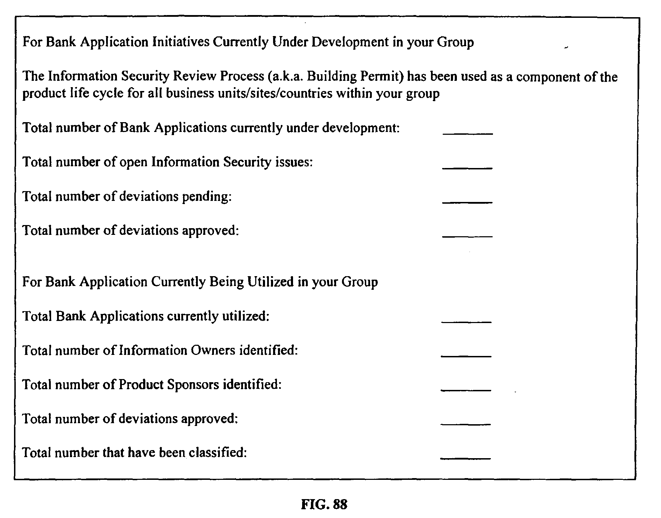

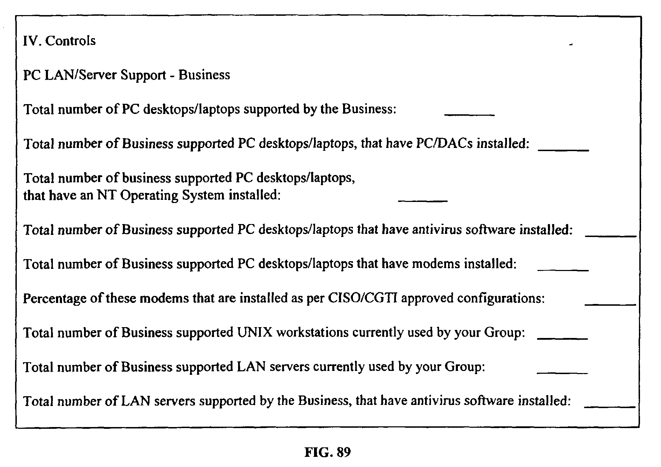

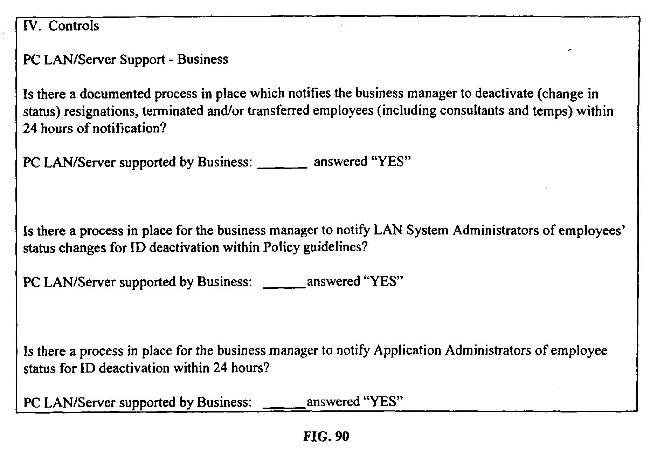

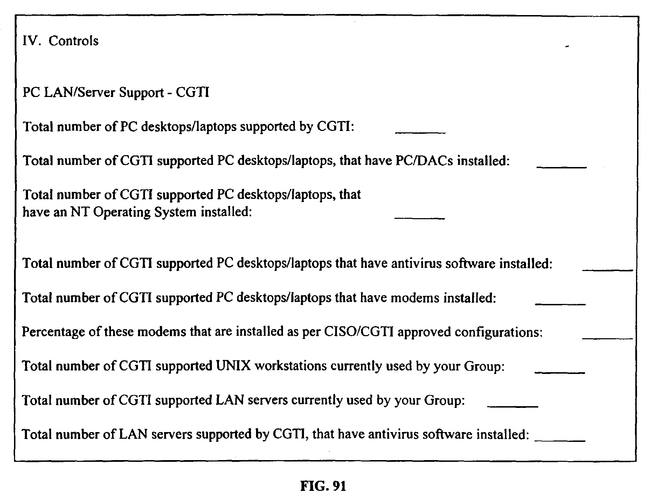

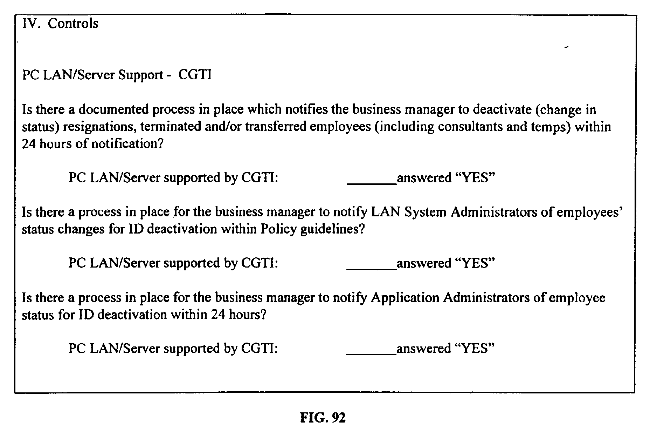

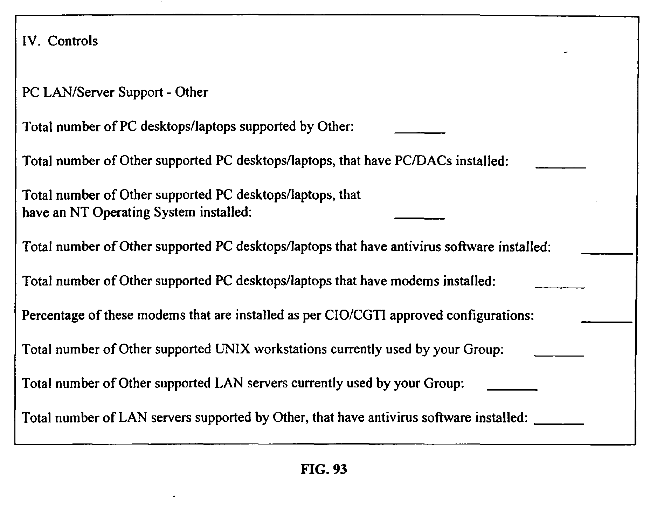

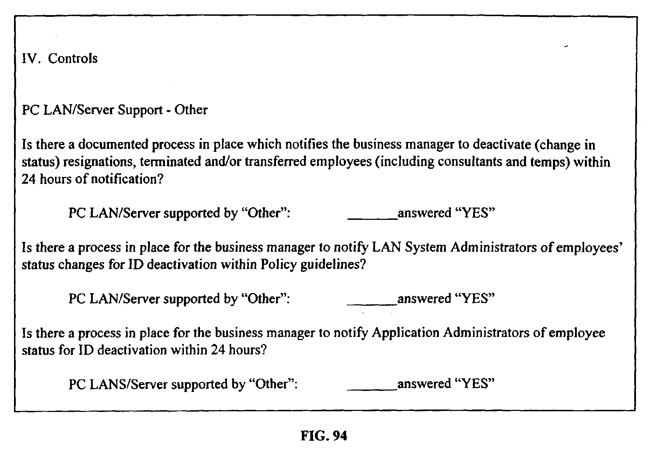

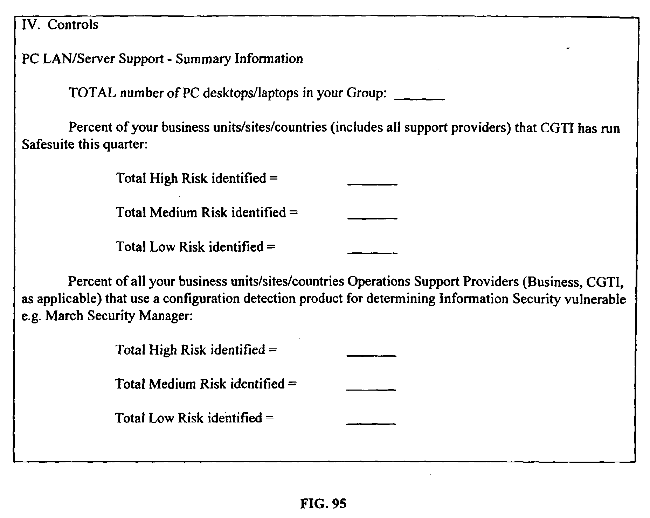

The above-cited examples show an embodiment of gathering and receiving first-level information security status data from the BISOs. Once the BISOs provide the status data, the system, at the command of a GISO, generates an information security first-level report using the first-level information security status data received from the BISOs 55. This first level report (called a BISO report in the embodiment discussed) shows the first level summary information security data. An example of a first-level report is shown in FIGS. 86-95. The GISO uses the first-level report to complete a GISO survey, an example of which is shown in FIGS. 51-85, thereby providing the system with second level information security status data. The GISO survey shown comprises a GISO questionnaire, which inquires of data relating to the BISO report. The GISO inputs such data using a network element in communication with the system network. The system receives the second level information security status data from the GISO 56.

The system then calculates second level summary information security data 57 based on the second level status data received from the GISOs. Such calculation includes extrapolation and manipulation of the second level status data. This second level summary information security data comprises a summary of all of the information security status data gathered. Summary data may include averages, percentage of positive or negative responses, and similar data.

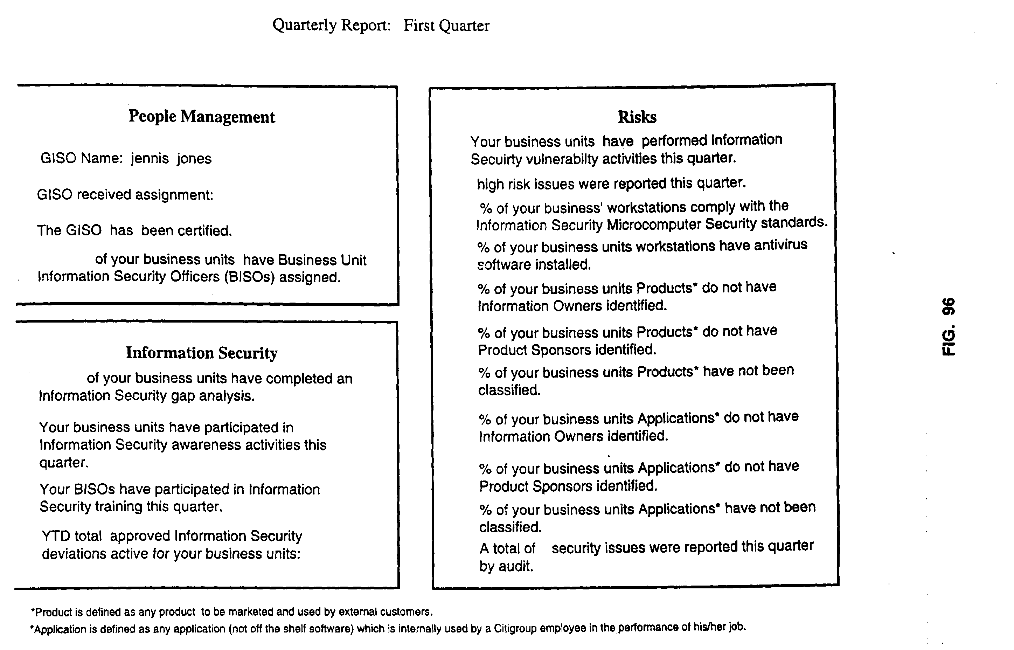

In the embodiment shown, after generating the summary information security data, the GISO generates an information security report having second-level summary information security data 58. In the embodiment, this second-level report comprises an executive vice president (or EVP) report. The information security report preferably comprises a report showing summary information security data in a form that allows a reader (e.g., the vice president 12) to judge the effectiveness of information security programs, and allows business decisions to be made about information security. Such a report is provided by the "Level 1" GISO 22 to the vice president 12. An example of such a report is shown in FIG. 96.

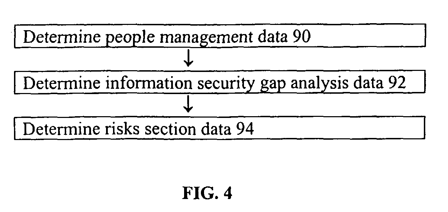

Generation of an information security report may comprise several steps. Referring to FIG. 4, in the embodiment shown, generating of an information security report comprises determining people management data 90, determining information security gap analysis data 92, and determining risks section data 94. The determination of such data 90, 92, 94 in the embodiment shown is made by using the information security metrics data and the information security status data, and extrapolating and manipulating the data. An example of displaying people management data is shown in FIG. 96. Likewise, an example of displaying information security gap analysis data and displaying risks section data is shown in FIG. 96.

The GISO 22 and the vice president 12 review the second-level information security report for deficiencies in information security programs, desired improvements in information security, and other aspects of information security 60. Preferably, judgments about the validation and effectiveness of information security programs is made by the GISO 22 and the vice president 12 while reviewing the report. In embodiments, others (e.g., other GISOs 16, 18, 20) review the second-level report.

Following the review of the information security report, the GISOs and the corresponding business implements information security measures to improve or otherwise alter information security according to security report 62. For example, if the second-level report indicates deficiencies in the virus-check aspect of an information security program, the GISO may direct that a specified version of virus-check software be used, or may direct that various computer procedures be updated by a certain date. Preferably, this implementation is carried out by the GISOs and the BISOs.

FIGS. 5-96 show a detailed example of an embodiment of the present invention. The embodiment is one used by a bank. As an example, the bank is structured as discussed above, with BISOs and GISOs. These figures reflect an example of a system and method for validating and measuring effectiveness of information security programs.

This example is discussed in detail below. As an overview, FIGS. 5-50 show an example of a BISO security information survey used in gathering information security status data relative to information security data elements of interest from BISOs. FIGS. 51-85 show an example of a GISO security information survey, in the form of a GISO questionnaire, used in gathering information security status data relative to information security data elements of interest. FIGS. 86-95 show an example of BISO report (or first level information security report, or first-level database report). FIG. 96 shows an example of an executive vice president report (or second level information security report, or second-level database report).

First, the CISO chooses information security metrics data of interest by choosing metrics elements of interest. Then, the system receives information security status data relative to information security data elements of interest. The information security metrics data, including information security data elements of interest, and the information security status data is reflected in FIGS. 5-85. The CISO creates surveys (or forms) that ask the BISOs and GISOs for the information security metrics data. CISO uses, for example, Raosoft to create the surveys.

In the embodiment, the BISOs and the GISOs have access to network elements (computers with 32-bit processors) that are connected to a network. The network includes (or has access to) a platform from which the BISOs and GISOs may download files and transmit data. For example, the platform may be the internet or an intranet. In the embodiment described, the CISO manages a home page site which makes a BISO survey form file and a GISO questionnaire (or survey) form file available for downloading. The form files comprise web-based pages containing web-based forms which query the user. Both form files are stored as executable files on the CISO home site.

The BISOs download the BISO survey form file to the BISOs computers for completion. Preferably, each BISO completes the BISO survey on a quarterly basis. Also, the BISO downloads from the CISO site a data control file which contains BISO names and identification numbers. The data control file is used by the system to verify the validity of the BISO identification number input by the BISO in completing the BISO survey.

In the system described, the BISO security information survey is conducted on networked computers. Each figure in FIGS. 5-50 depicts a web-based page in the BISO survey. The figures are in the order of the survey embodiment. Each page is displayed to a BISO on a networked computer, and is displayed in the order shown. The information provided by the BISO in response to each page is received and recorded by the system in, for example, a database file or other data file on the BISO computer.

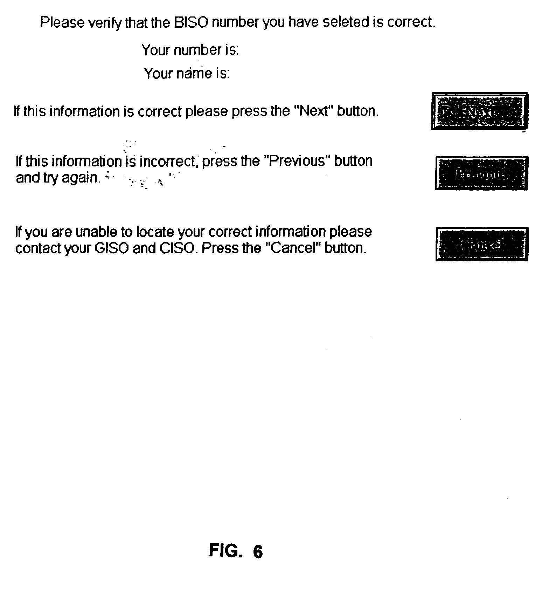

First, referring to FIG. 5, the system requests log-in data from a BISO. The BISO is asked for the BISO's BISO Number, which reflects the identity of the BISO completing the survey. The system confirms the BISO number supplied by access to a data file maintained by the CISO. FIG. 6 displays a confirmation page supplied to the BISO.

In an embodiment of the present invention, GISOs and BISOs are assigned a number, such as an eight digit number, which uniquely identifies a particular GISO or BISO. The assigned number must be used each time a GISO or BISO opens a survey form. GISOs are divided, for example, into two levels, such as L1 and L2, in order to accommodate an organization in which GISOs may have another GISO reporting to them. Numbers assigned to BISOs fall, for example, below the GISOs and tie directly to the GISO organization within which they work. Each GISO is assigned, for example, a three digit number by the CISO. In addition, each GISO is assigned, for example, a number for each of their reporting GISO's, where applicable, and a range of numbers for their BISOs.

The CISO maintains a control file with all GISO and BISO numbers. Any changes in GISO or BISO number status are communicated to the CISO. Examples of such changes include change of the BISO name associated with a BISO number or a new BISO with a new number assigned from a spreadsheet range. When a GISO or BISO first uses a survey or questionnaire form, the system software displays a GISO or BISO number box, which is a pull-down, menu-selection box. The system software then prompts the GISOs or BISOs for verification of their number and name, and this validation process is used to maintain a control file.

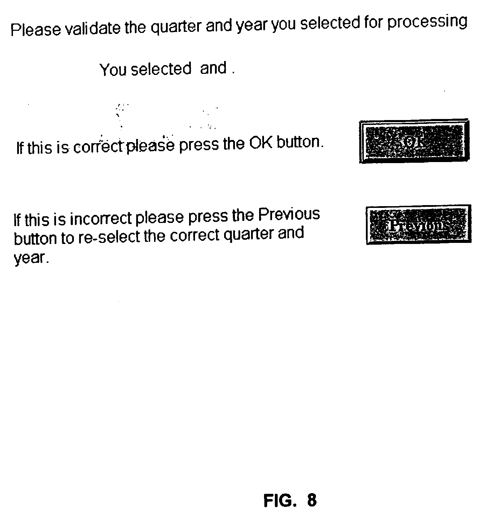

Referring to FIG. 7, the system requests time scope of interest data from the BISO. In the survey page shown, the system requests the quarter and the year of interest. The remaining data input by the BISO during the survey is preferably data from the time period selected here. FIG. 8 displays a confirmation page supplied to the BISO.

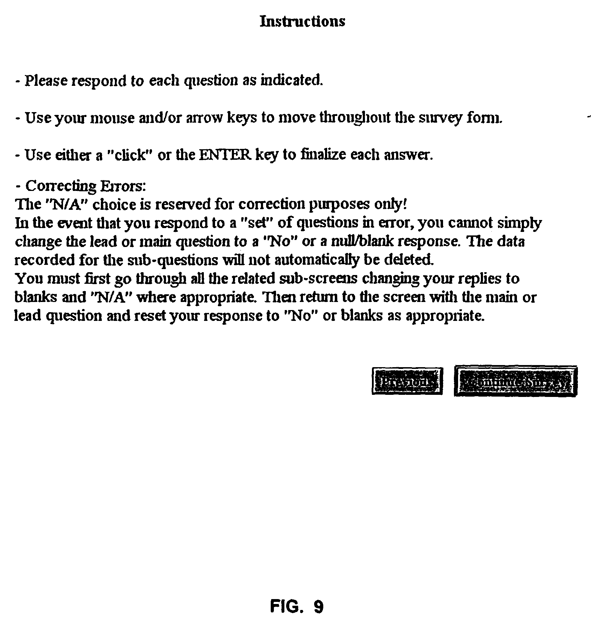

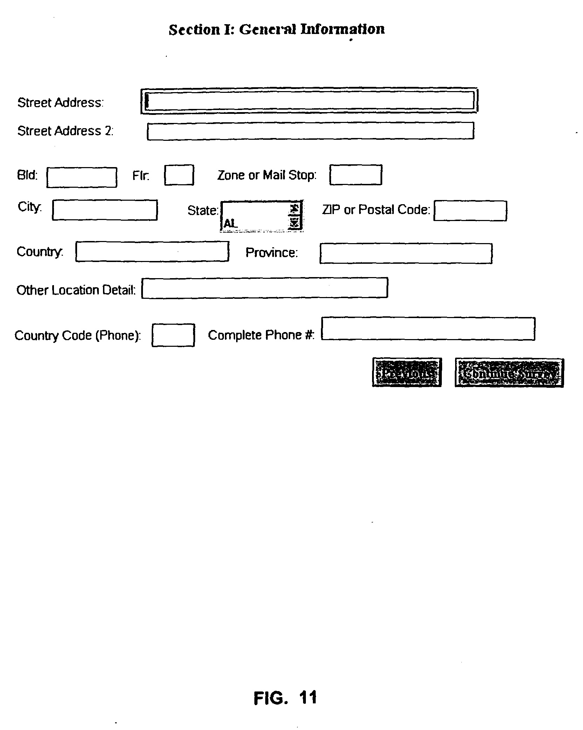

As shown in FIG. 9, the system then displays instructions for the remainder of the survey to the BISO. Then, the system requests general security information data from the BISO, as shown in FIG. 10 and FIG. 11. In the survey pages shown in FIGS. 10 and 11, the BISO is asked for general information, such as the BISO's division and business codes, date of BISO assignment, address, telephone number, and other, similar information.

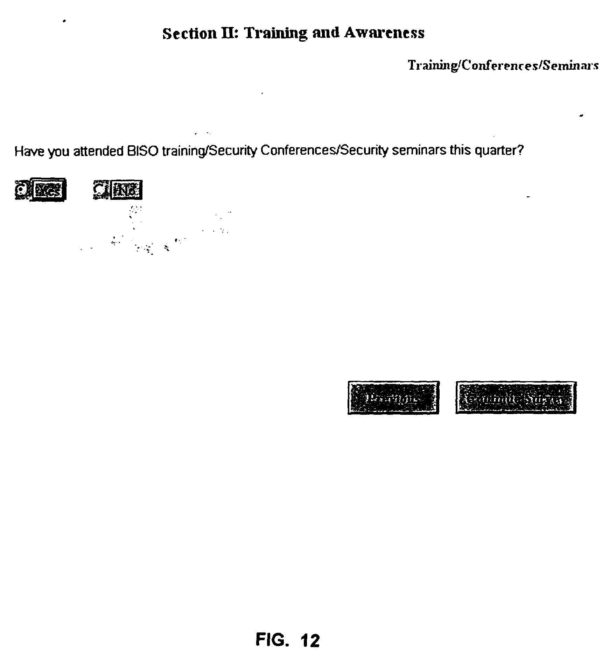

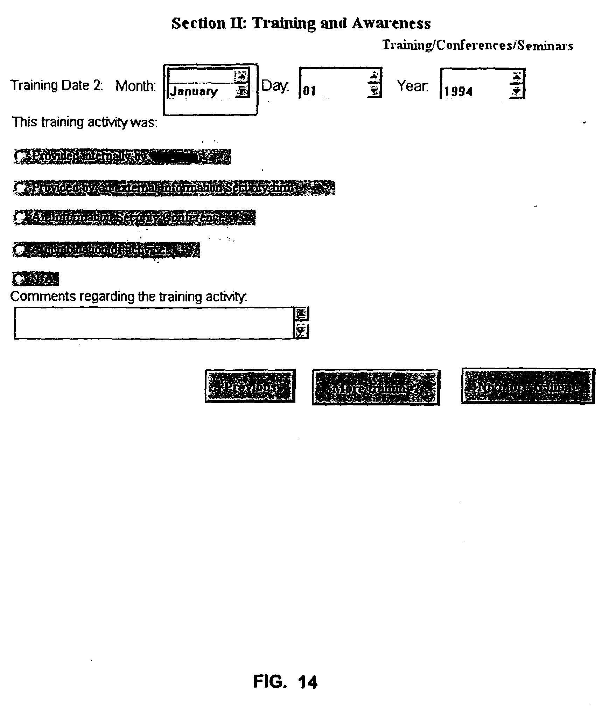

Referring to FIGS. 12-19, the system requests information security awareness data, in the form of information security training data, from the BISO. As shown in FIGS. 12-19, the system requests such data as whether the BISO attended training seminars during the quarter. As shown in FIGS. 13 and 14, the system also requests data regarding each of the training seminars attended by the BISO. The system may ask for information regarding any number of training activities, providing such a page for each one. The system allows the BISO to indicate that there was another session by hitting the "More Training?" button 130. If the button 130 is activated, the system provides another training/conference/seminars information page to the BISO. For example, if the button 130 is activated in the page shown in FIG. 13, the page shown in FIG. 14 is provided to the BISO. If the "No More Training" button 132 is activated, the page shown in FIG. 14 is not provided.

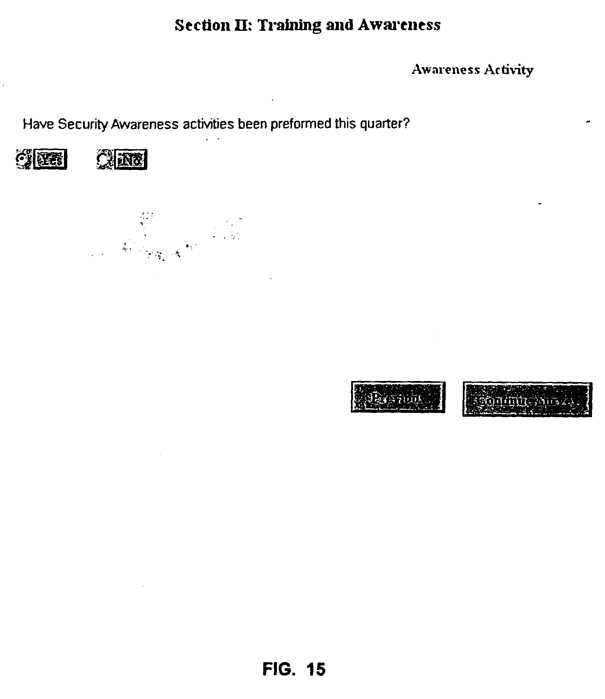

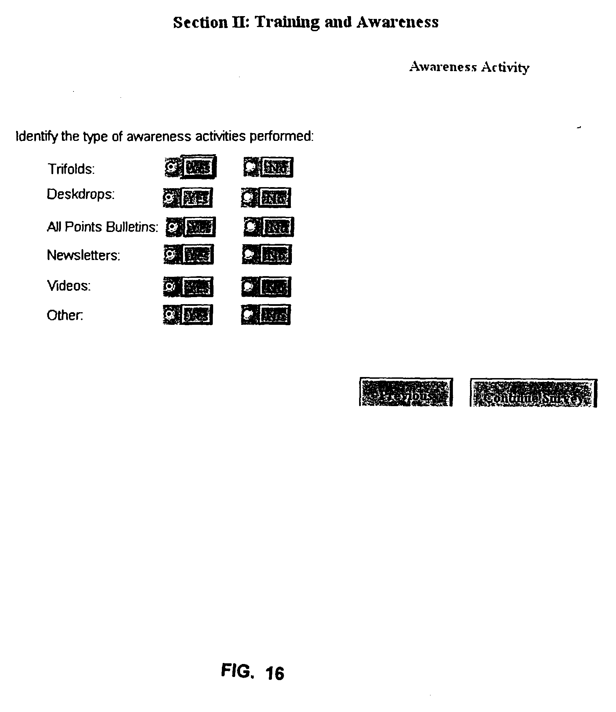

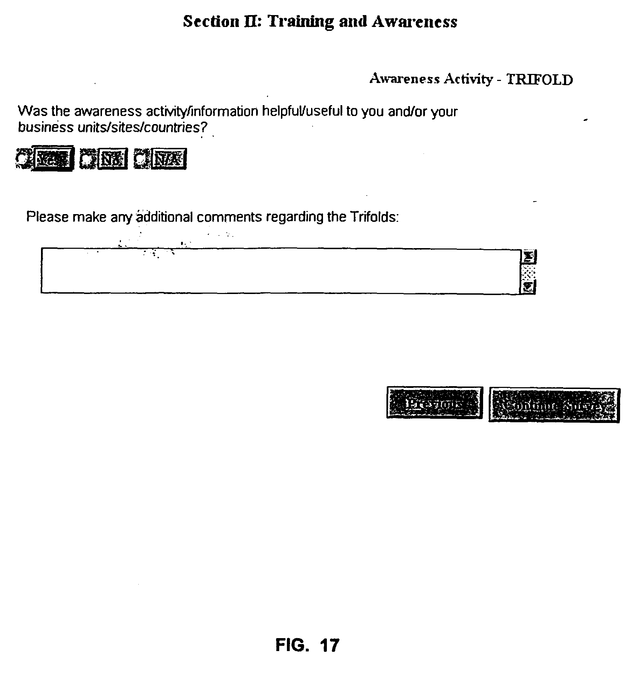

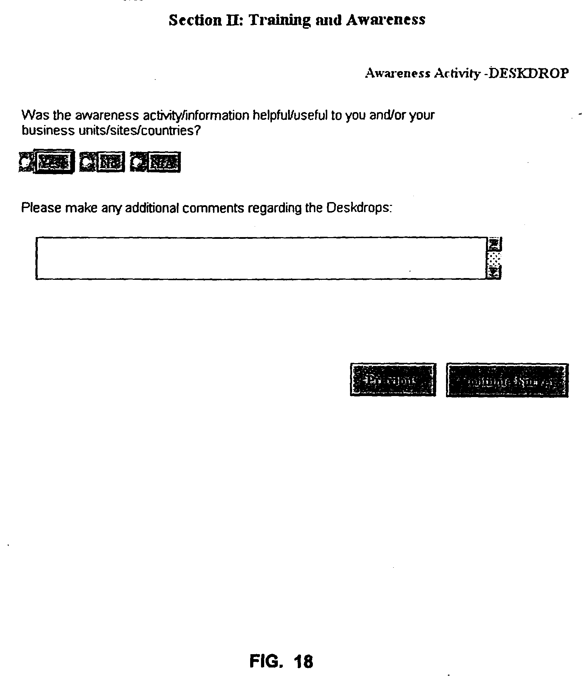

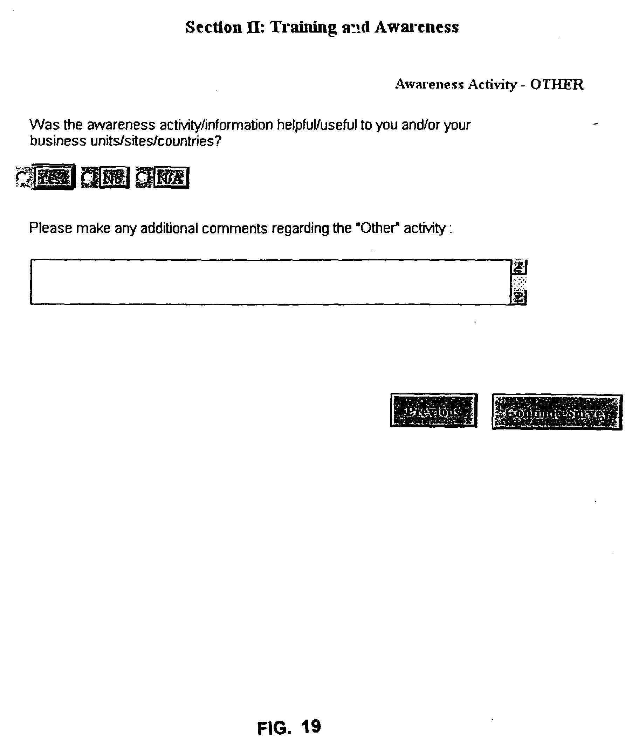

Further information security training data is requested from the BISO by the system. Referring to FIG. 15, the system inquires whether security awareness activities have been performed this quarter. If the response to the inquiry shown in FIG. 15 is "Yes," the systems asks the BISO to identify the type of awareness activities performed by providing an awareness activity page shown in FIG. 16, providing a check list of activities. Then, for each of the activities that the BISO indicates were performed on the page shown in FIG. 16, the system asks if the activity was helpful and useful, and for comments about that activity. For example, FIG. 17 shows a page provided to the BISO if the BISO indicates that the "Trifold" activity was performed. FIG. 18 shows a page provided to the BISO if the BISO indicates that the "Deskdrop" activity was performed, and FIG. 19 shows a page provided to the BISO if the BISO indicates that "Other" activity was performed.

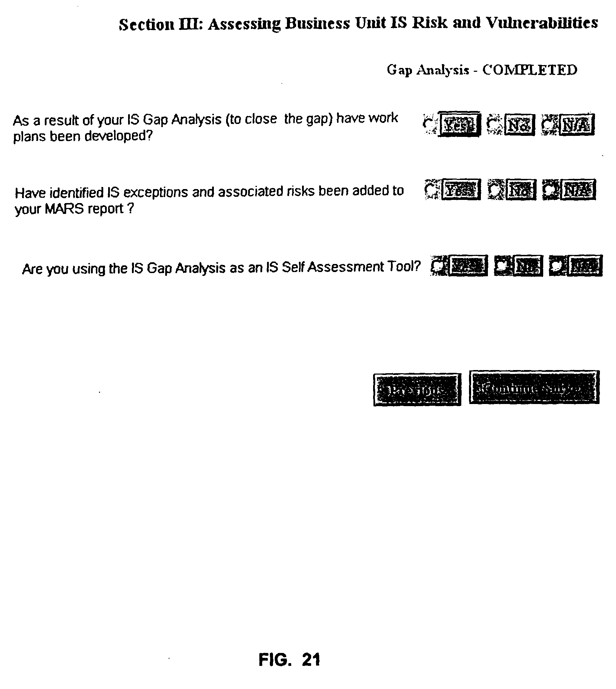

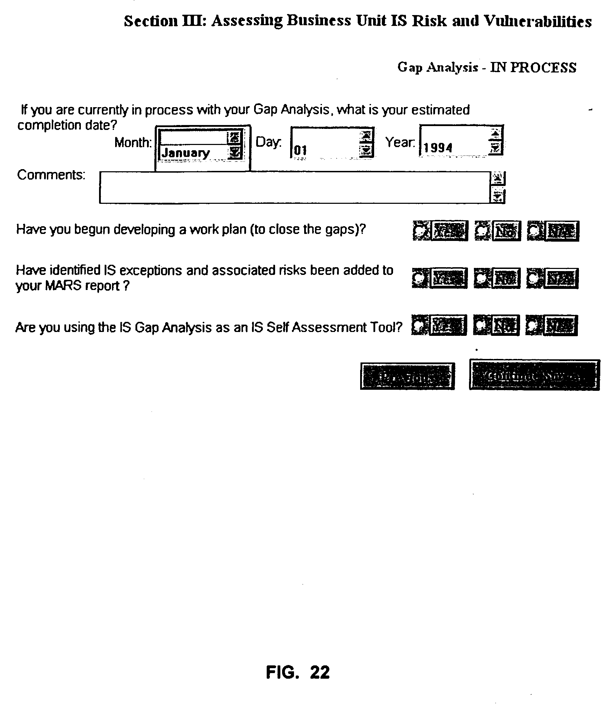

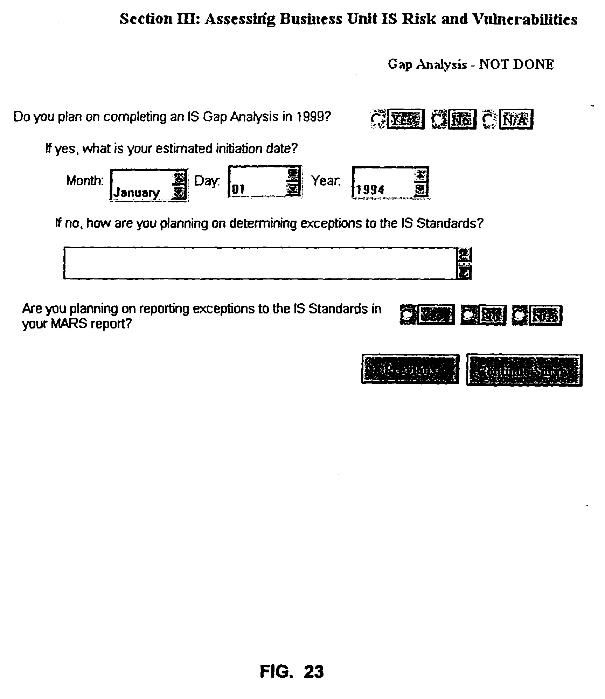

FIGS. 20-23 show survey pages requesting information security risk and vulnerability data, in the form of information security gap analysis data. Information security gap analysis comprises reviewing areas of information security that should be improved ("gaps"). Referring to FIG. 20, the system inquiries if the current status of the BISO's information security gap analysis is completed, in process, not done, or other. If the BISO selects "other," the BISO is asked to provide a comment about the BISO's "other" response. If the BISO indicates completed, in process, or not done, the BISO is provided by the system with a survey page asking for further detail. For example, if the BISO replies "completed" in the page shown in FIG. 20, the BISO is provided with the page shown in FIG. 21, which requests information related to "completed" information security gap analysis, e.g., a MARS report. A MARS report is a management awareness rating system comprising a self-assessment of a business group. FIGS. 22 and 23 request data regarding gap analysis if the BISO answers "in process" or "not done," respectively, in the page shown in FIG. 20.

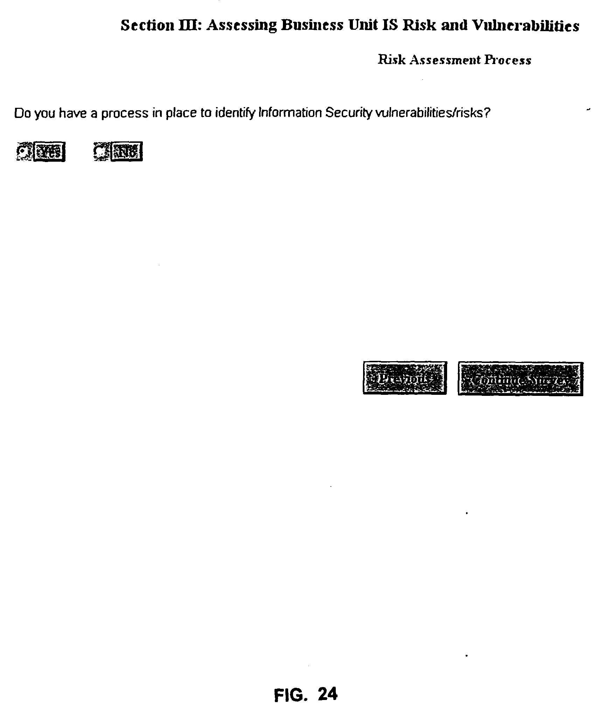

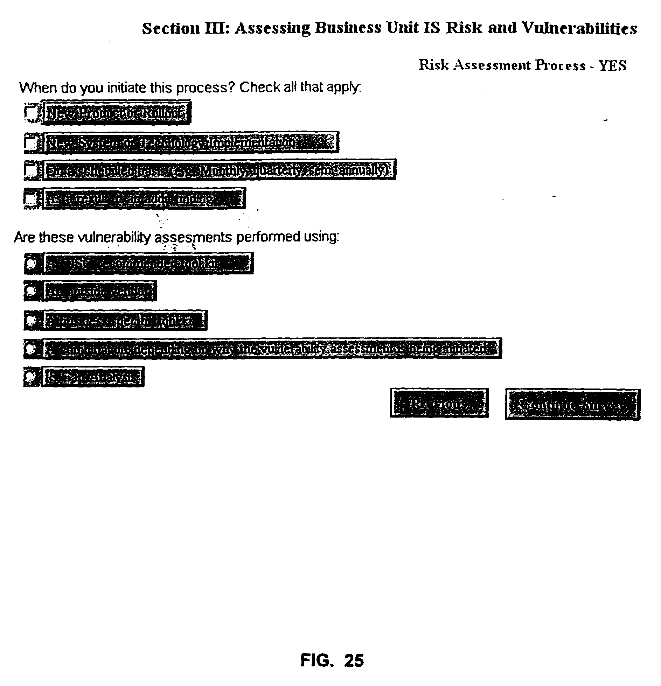

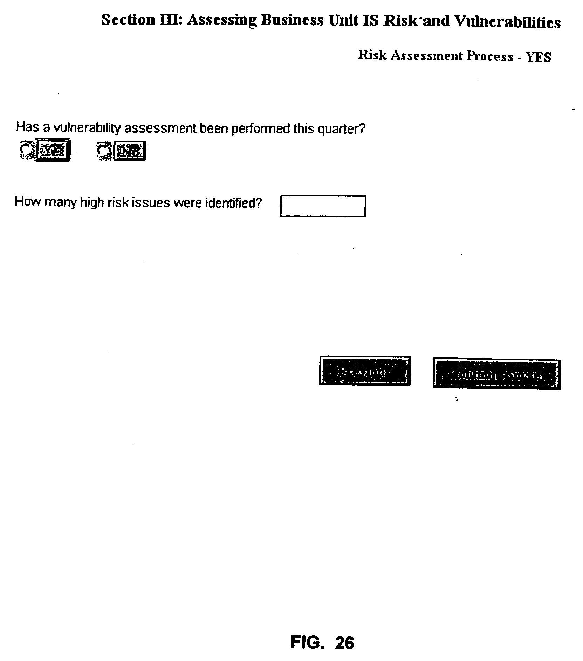

FIGS. 24-29 display pages in which the system requests further information security risk and vulnerability data. The page shown in FIG. 24 inquires whether the BISO has a process in place to identify information security vulnerabilities and risks. If the BISO answers "yes," the BISO is presented with the page shown in FIG. 25, which requests further data about such process, and with the page shown in FIG. 26, which inquires about vulnerability assessment and the number of high risk issues identified in the assessment.

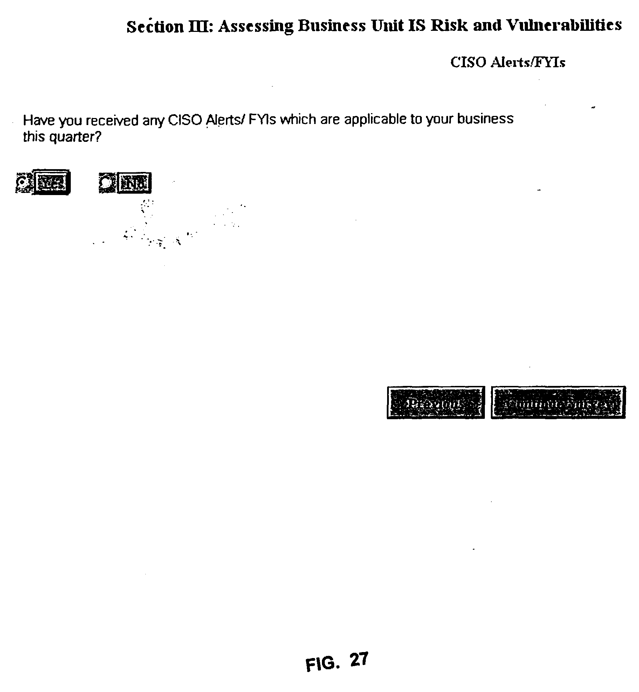

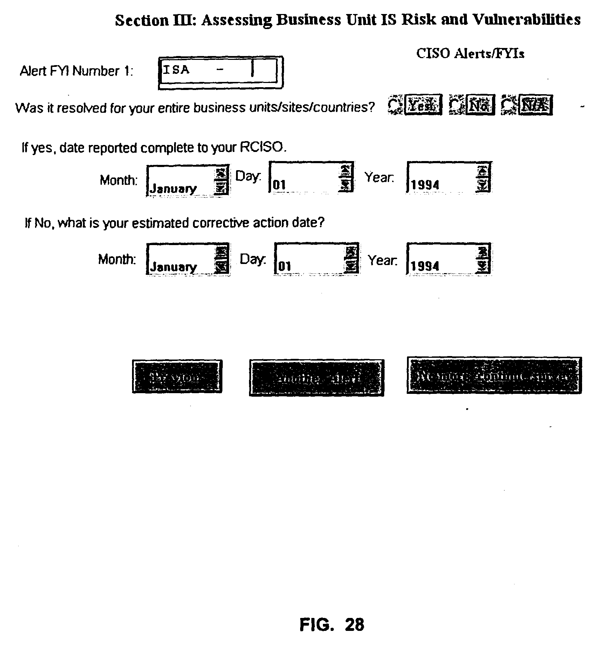

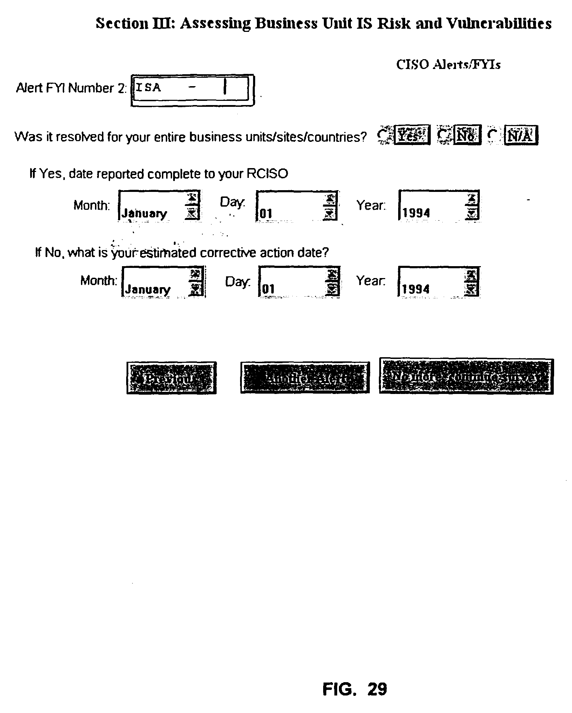

FIGS. 27-29 request CISO alert / FYI data. CISO Alerts / FYI comprise bulletins about information security. If the BISO responds "yes," that the BISO has received CISO Alerts, in the page shown in FIG. 27, the systems asks the BISO for data relating to each of the FYIs that the BISO indicates the BISO received, as shown in FIGS. 28 and 29.

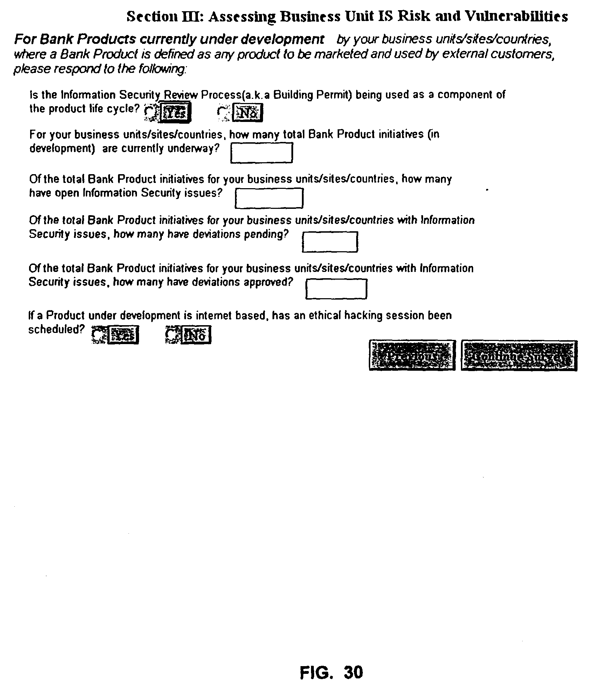

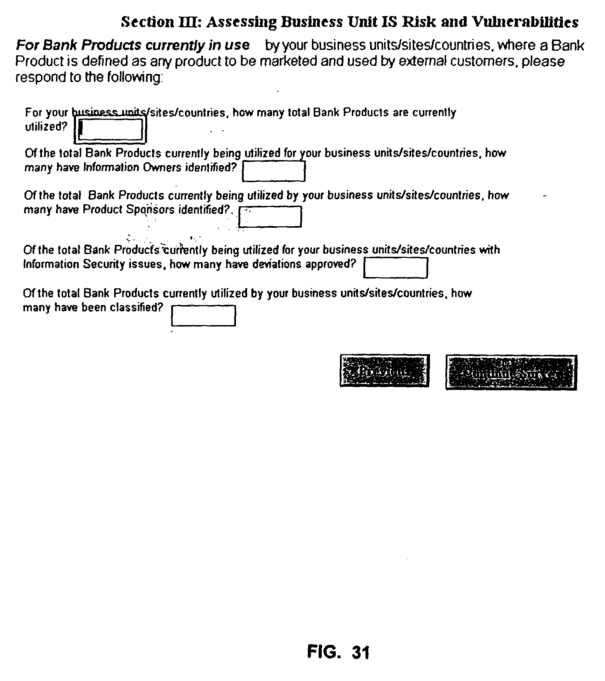

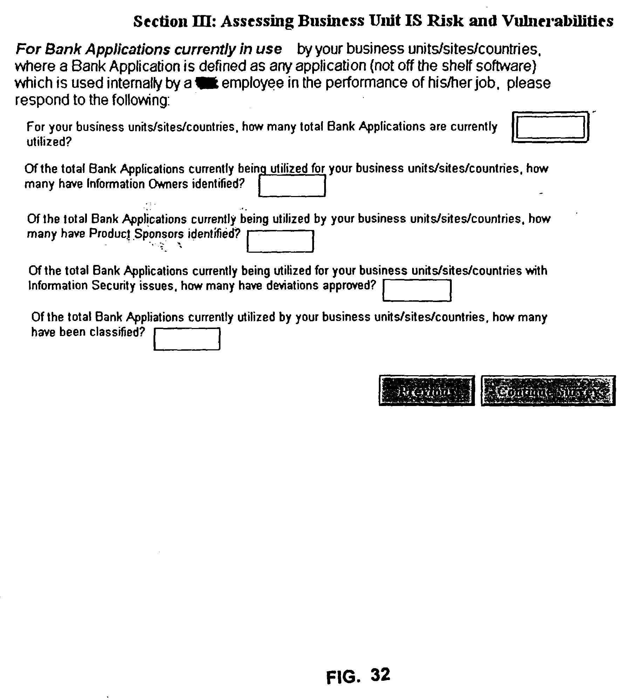

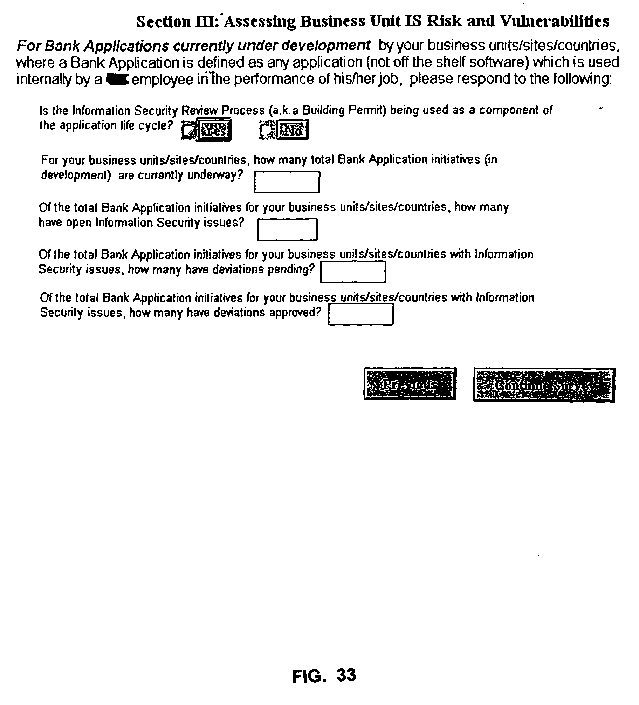

FIGS. 30-33 show pages requesting further business unit information security risk and vulnerability data. Data is requested by the system of the BISO pertaining to bank products currently under development (FIGS. 30 and 33) and bank products currently in use (FIGS. 31 and 32).

Next, the system requests information security control data from the BISO. FIGS. 34-49 show survey pages supplied to a BISO by the system that request information security control data. FIG. 34 shows the initial controls data survey page, which requests data relating to computer hardware usage. The page requests data regarding the total number of PC desktops/laptops in the BISO's business units/sites/countries. Also, the page asks for PC/LAN business support data -- whether for the BISO's area, PC and LAN/Server support is provided by the business, PC/LAN CGTI support data -- whether for the BISO's area, PC and LAN/Server support is provided by CGTI, and PC/LAN third party support data - - whether for the BISO's area, PC and LAN/Server support is provided by a third party. CGTI is Corporate Global Technology Infrastructure comprising central technology support for the business.

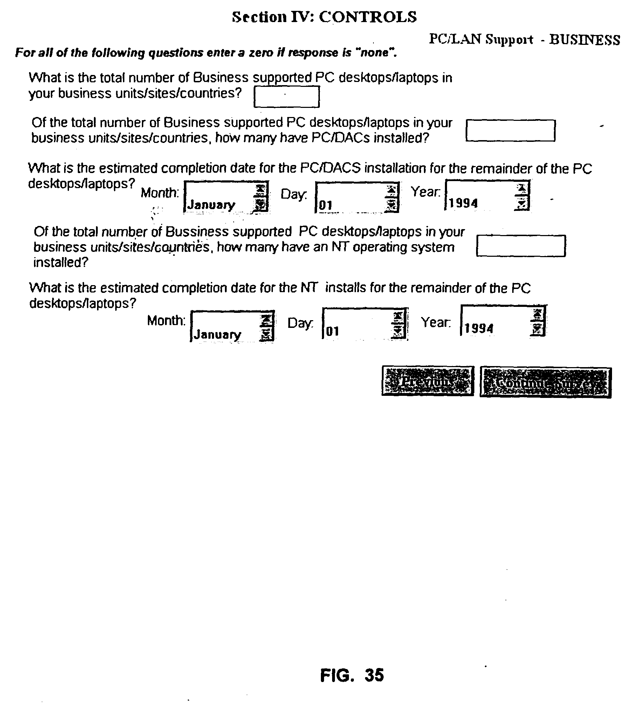

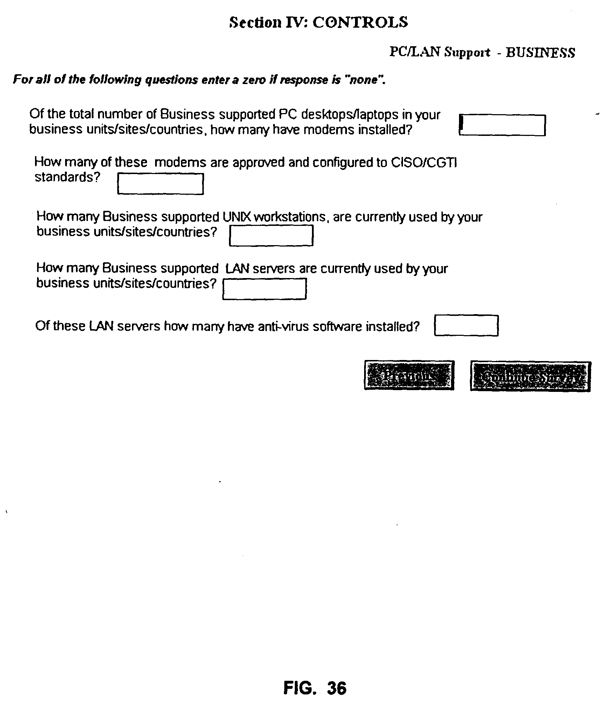

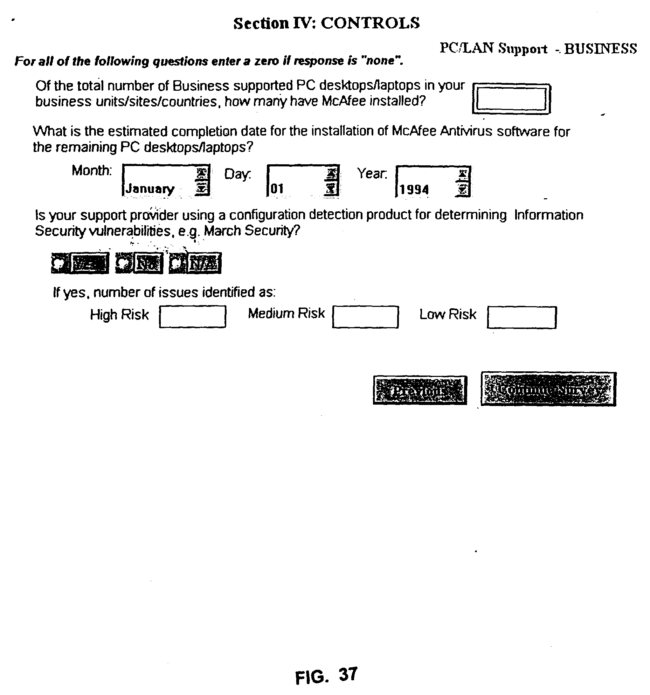

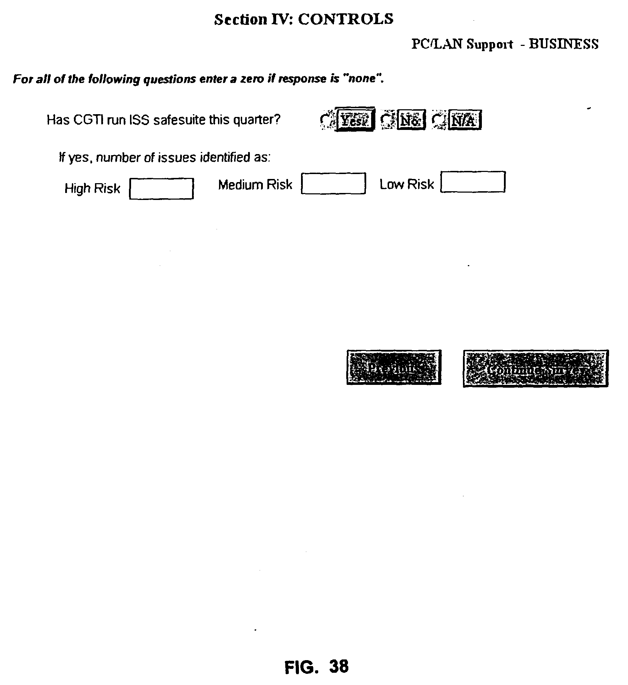

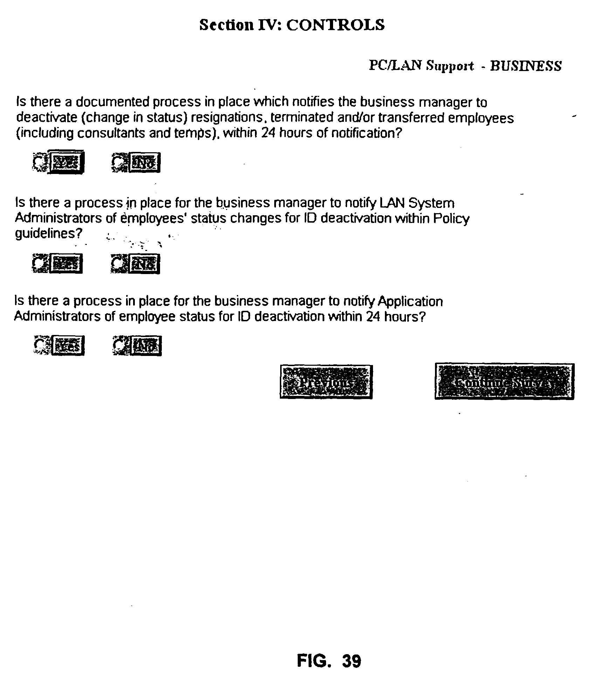

If the BISO's response to whether for the BISO's area, PC and LAN/Server support is provided by the business is "yes," the system supplies the BISO with the pages shown in FIGS. 35-39 (as with all of the figures, they are displayed one at a time after the BISO clicks "Continue Survey"). Referring to FIGS. 35-39, which shows requests for PC/LAN business support data, the BISO is asked by the system for various PC/LAN business support data. For example, referring to FIG. 35, the BISO is asked for the total number of business supported PC desktops/laptops in the BISO's business units/sites/countries. As another example of requesting information security control data, referring to FIG. 36, the system asks the BISO for the number of business supported UNIX workstations are currently used by the BISO's business units/sites/countries. As another example, the pages shown in FIGS. 37 and 38 ask for the number of issues identified as high risk, medium risk, and low risk in carrying out certain information security functions. For example, in FIG. 38, the system inquires about the Internet Security System SafeSuite product (ISS), comprises a monitoring system for detecting intrusions. Also, as a further example, referring to FIG. 39, the system also makes several "yes/no" inquiries of the BISO as to processes in place related to information security.

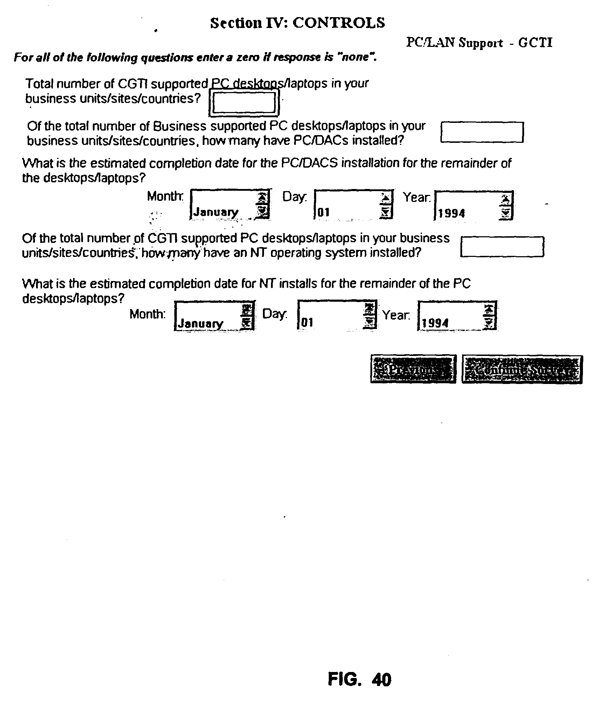

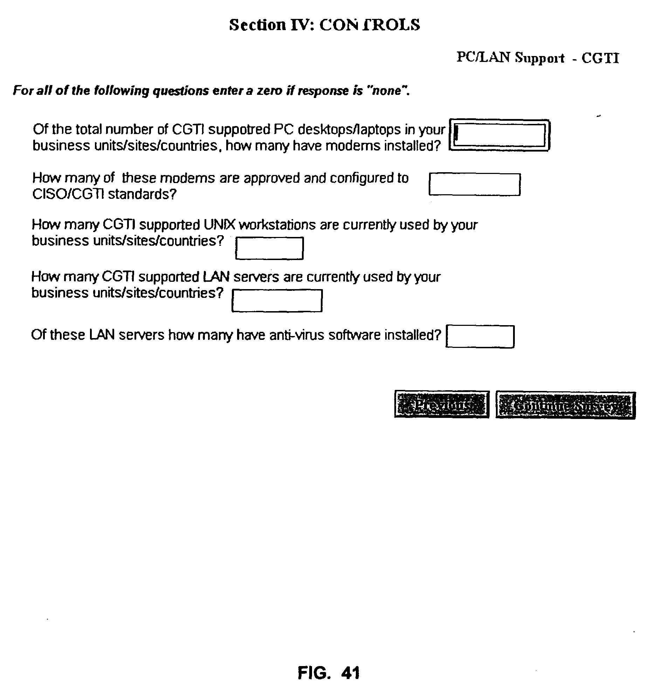

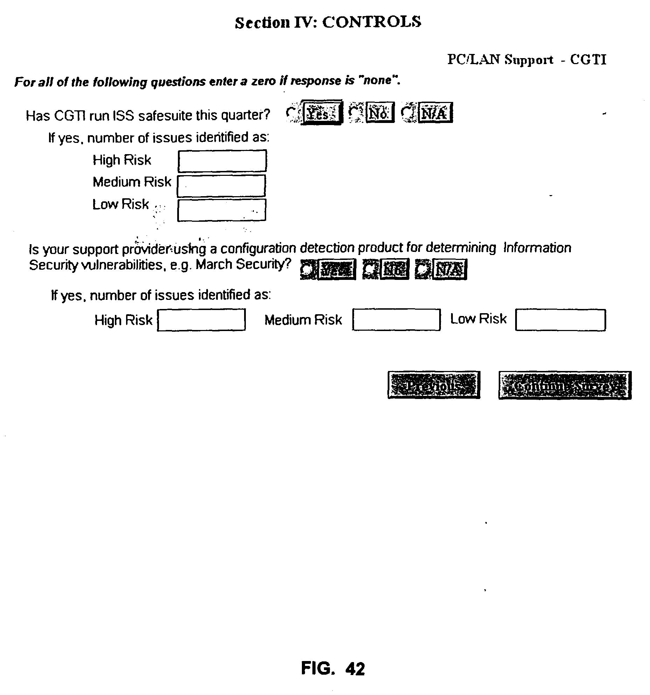

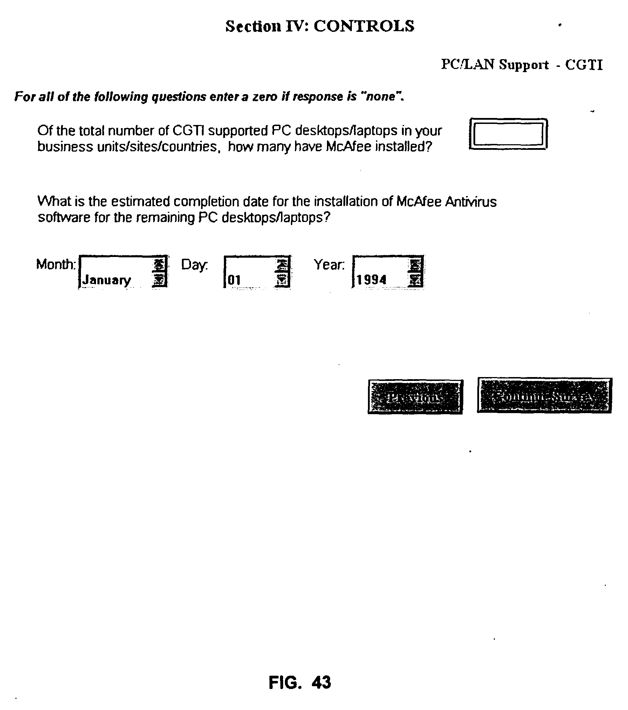

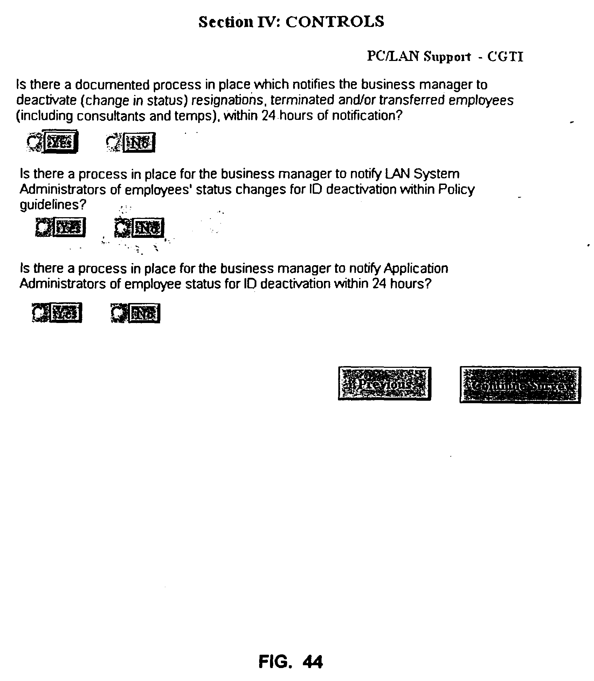

If the BISO's response to the inquiry made on the page shown in FIG. 34 as to whether for the BISO's area, PC and LAN/Server support is provided by CGTI is provided by the business is "yes," the system supplies the BISO with the pages shown in FIGS. 40-44. Referring to FIGS. 40-44, which shows requests for PC/LAN CGTI support data, the BISO is asked by the system for various PC/LAN CGTI support data. For example, referring to FIG. 40, the system asks the BISO for the total number of CGTI supported PC desktops / laptops in the BISO's business units/sites/countries and the Desktop Access Control System (DACs) comprising software that assists in protecting the desktop, and, referring to FIG. 41, the systems asks the BISO for the number of certain modems that are approved and configured to CISO/CGTI standards. As another example, referring to FIGS. 42 and 43, the system also asks the BISO about running and installation of certain information-security-related computer applications. Also, as another example, referring to FIG. 44 the system also asks a series of questions about processes in place.

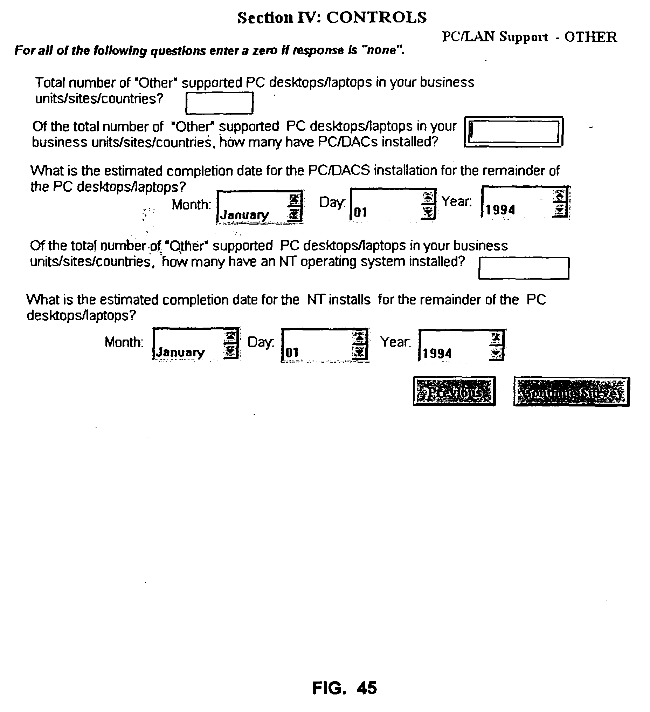

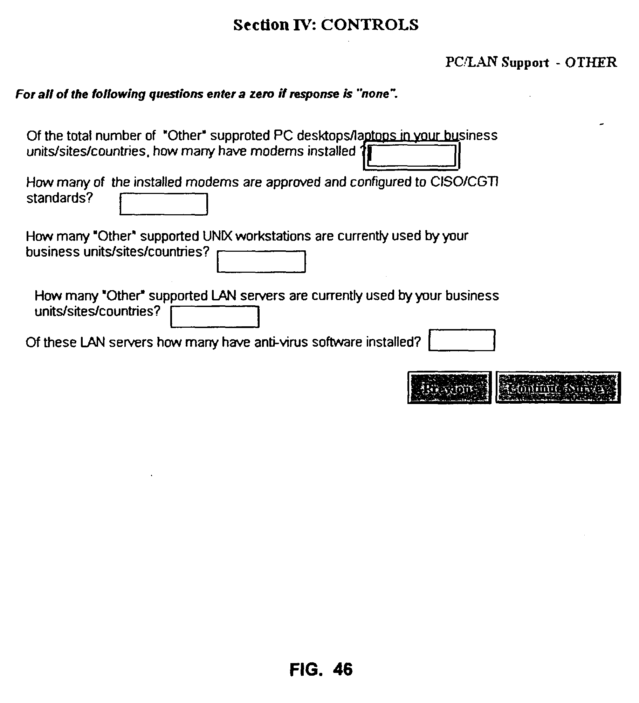

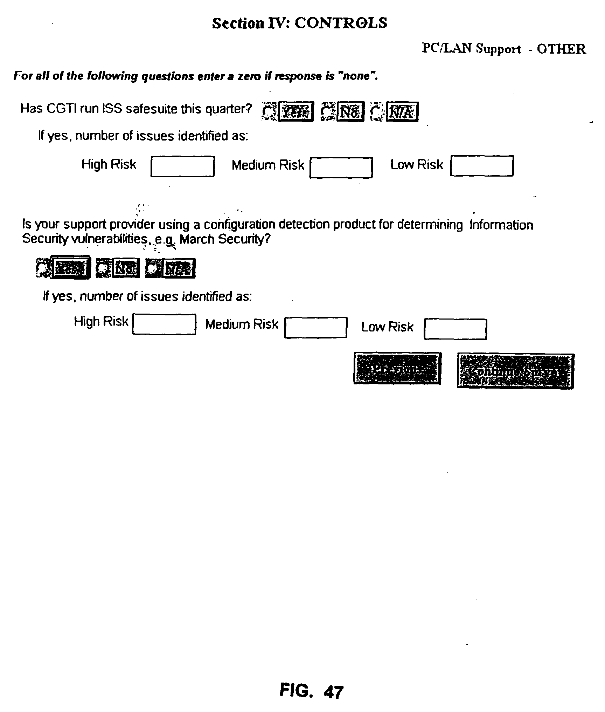

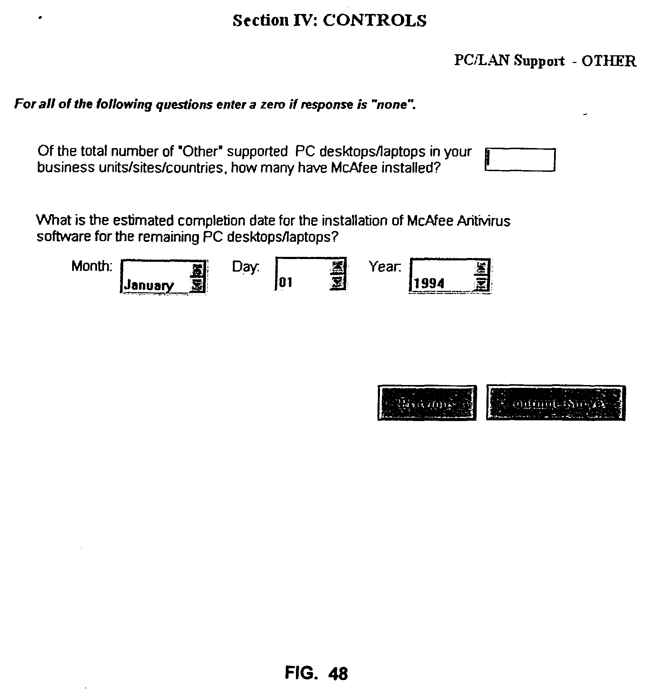

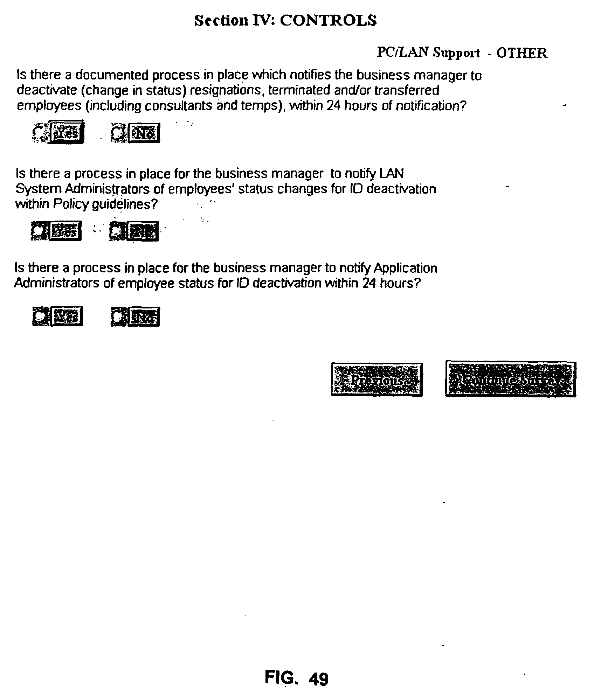

If the BISO's response to the inquiry made on the page shown in FIG. 34 as to whether for the BISO's area, PC and LAN/Server support is provided by a third party is "yes," the system supplies the BISO with the pages shown in FIGS. 45-49. Referring to FIGS. 45-49, which shows requests for PC/LAN third party support data, the BISO is asked by the system for various PC/LAN third party support data. For example, referring to FIG. 45, the BISO is asked for the total number of "other" supported PC desktops / laptops in the BISO's business units/sites/countries and, referring to FIG. 46, the BISO is asked for the number of "other" supported LAN servers that are currently used by the BISO's business units/sites/countries. As another example, referring to FIG. 47, the BISO is asked to identify the number of issues identified during certain information security procedures that were high risk, medium risk, and low risk and, referring to FIG. 48, the BISO is asked to identify the number of "other" supported PC desktops/laptops in the BISO's area. Also, as a further example, referring to FIG. 49, the system requests data regarding processes related to information security.

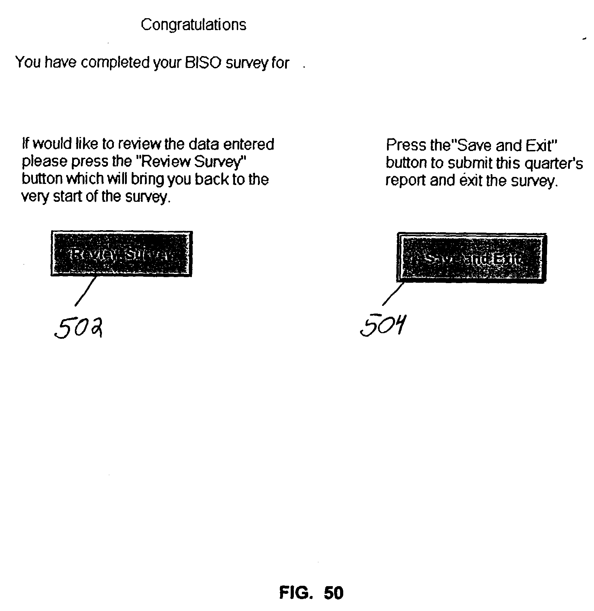

Finally, referring to FIG. 50, the BISO is given the opportunity by the system to review the data entered by the BISO during the survey by clicking a button 502. If the BISO does not wish to review the data (or once the BISO has finished reviewing the data), the BISO indicates that the BISO has completed the survey by clicking the "Save and Exit" button 504. When the BISO clicks the "Save and Exit" button 504, the system saves the BISO's answers to the survey questions in a data file on the BISO's computer. Alternatively, the system may send the file (or the data) to the CISO and store the data centrally. In the embodiment discussed, a data file is created on the BISO's computer, and each time the BISO completes a survey, the data file is updated with the new form data input by the BISO. Also, in the embodiment discussed, each time a BISO completes a survey, a printable copy of the data input by the BISO is e-mailed to the BISO's supervising GISO.

The data supplied by the BISOs allows the system to generate a BISO report (or "first-level report"). The system generates a BISO report reflecting the data input by the BISOs. The BISO report is generated in relation to a group of BISOs working in a particular area, under a particular GISO. For example, referring to FIG. 1, once the system receives data from the two BISOs 24, 26 working under a GISO 16, the supervising GISO 16 requests a report, and the system will create a BISO report for their supervising GISO 16. Similarly, once the several BISOs 28, 30 working in a different group, for a different GISO 22, completes the survey, the system generates a BISO report for those BISOs for use by their supervising GISO 22 and/or the GISO 18 supervising their supervising GISO 22.

An example BISO report is shown in FIGS. 86-95. The BISO report is meant for use by a GISO supervising or otherwise responsible for a particular group of BISOs. The BISO report provided to the GISO is constructed from the information provided by the BISOs for which the GISO is responsible. As can be seen, the BISO report displays aggregated and analyzed information obtained from the BISO surveys conducted as described above. For example, referring to FIG. 86, the BISO report provides the number of BISO surveys received, the status of the information security gap analysis for that GISO's BISOs, and other information-security related information related to the relevant BISO pool.

The data generated for the BISO report can be seen from an examination of FIGS. 86-95. The BISO report provides the GISO with data regarding the information security of the business areas for which the GISO is responsible.

The BISO report is used by each of the GISOs in completing a GISO survey. The system gathers further information security status data by providing a GISO survey to various GISOs.

In the embodiment discussed, the GISO downloads to the GISO's PC connected to the system network, an executable file from the CISO site on the network. The file comprises an executable GISO questionnaire (or GISO survey) form. The GISO also downloads a data file containing GISO names and numbers that is used by the system to verify the GISO identification number input by the GISO. Also, GISOs download a file that facilitates the appending of BISO survey form result data to the GISO survey results. Moreover, user guide documents are available to the GISO on the CISO site for downloading by the GISO.

An example GISO survey (or "second level information security status data survey"), in the form of a GISO questionnaire, is shown in FIGS. 51-85. The GISO survey is similar in structure to the BISO survey. The GISO questionnaire seeks second level (or supervisory level) information security status data.

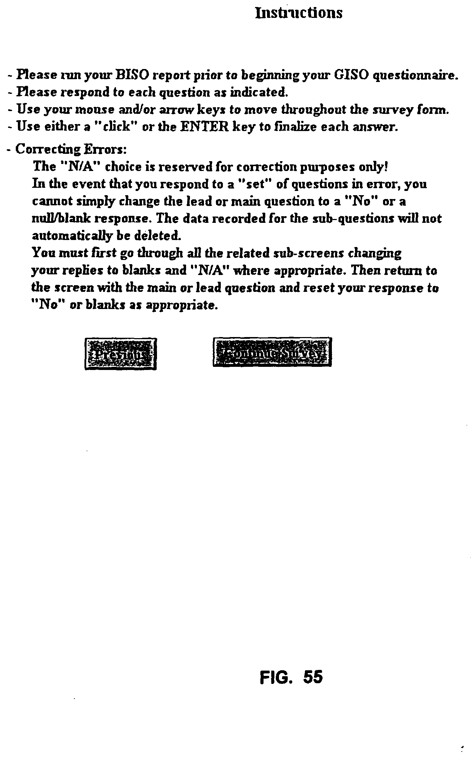

As shown in FIGS. 51-54, the system requests log-in data and time scope of interest data from the GISO. FIG. 55 shows a page providing the GISO with instructions for the report. One of the instructions is requesting the GISO to run the GISO's BISO report prior to beginning the GISO questionnaire (or survey). The GISO causes the system to run the BISO report, resulting in the BISO report (FIGS. 86-95) as described above.

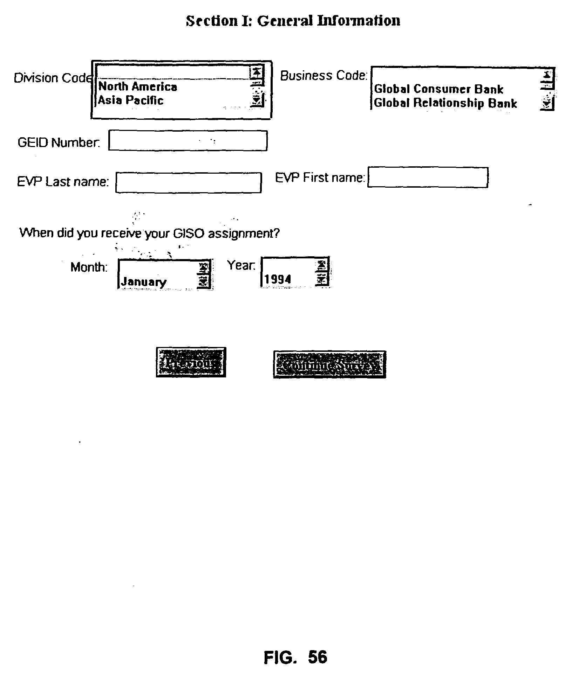

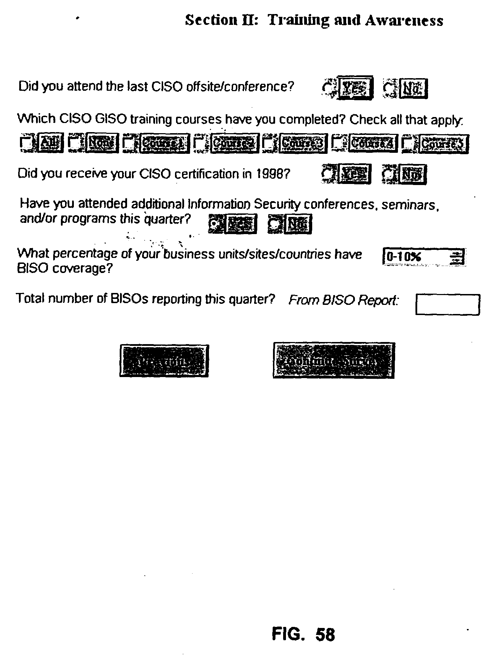

Referring to FIGS. 56-57, similar to the BISO survey, the GISO questionnaire requests general security information data from the GISO. Referring to FIGS. 58-61, the system then requests information security training data and information security awareness data. As is all data requested in the surveys discussed, this data is recorded by the system, e.g., on the GISO's PC.

Some of the data requested in the GISO questionnaire comprises data shown on the BISO report. For example, the survey page shown in FIG. 58 requests the total number of BISOs reporting this quarter. This number is shown on the GISO's BISO report. In other embodiments, the system automatically locates and obtains such data from the digital version of the BISO report. As can be seen, the GISO questionnaire requests management-level information security data.

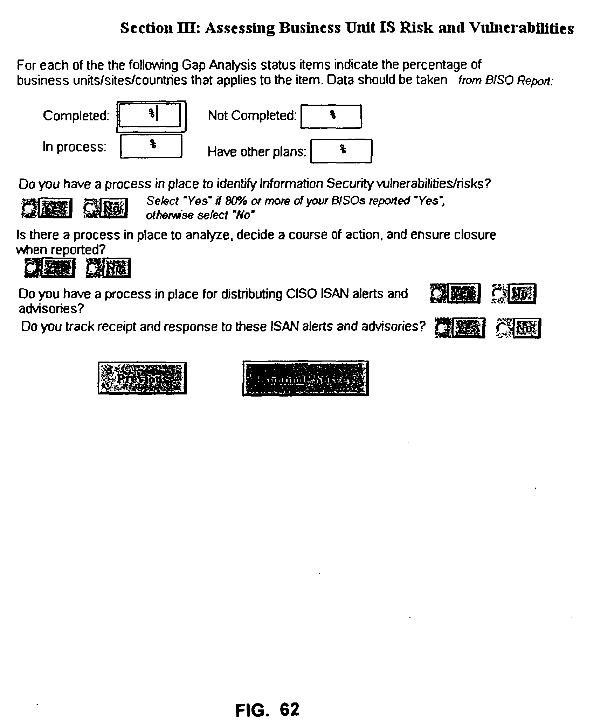

Referring to FIGS. 62-70, the system requests information security risk data and information security vulnerability data from the GISO. As can be seen, the risk and vulnerability data requested of the GISO is similar to that requested of the GISO, and the requesting structure is similar.

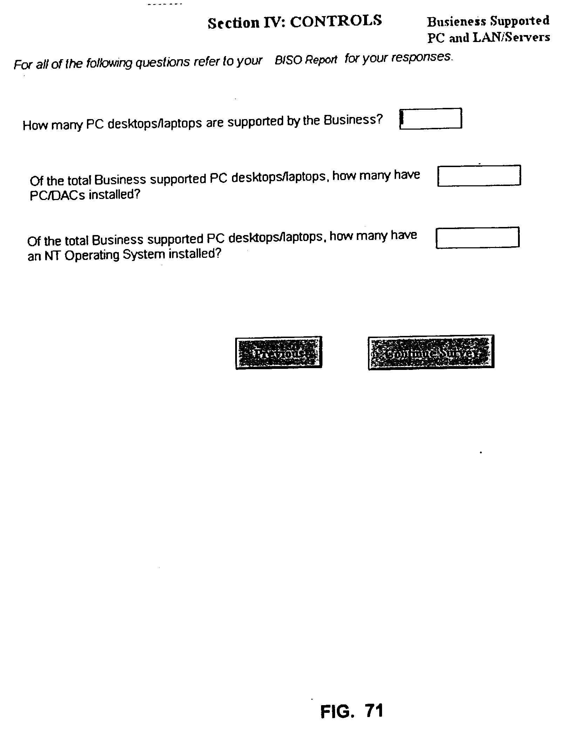

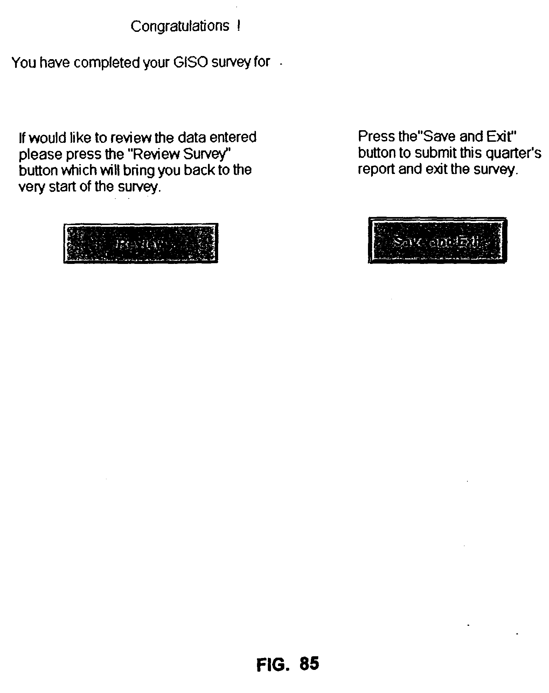

Next, referring to FIGS. 71-84, the system requests information security control data from the GISO. The GISO is asked to refer to the GISO's BISO report for many of the responses. Referring to FIG. 85, similar to the BISO survey, the GISO questionnaire provides the GISO the opportunity to review the data provided by the GISO. Once the GISO has completed the questionnaire and clicks on the "Save and Exit" button (shown in FIG. 85), the data provided by the GISO is recorded by the system, e.g., in a data file on the GISO's computer.

Once the GISO(s) reporting to a vice president complete their surveys (or questionnaires), the system calculates summary information security data and generates a second-level information security report having second-level summary information security data. The system does so at the command of the GISO, but in other embodiments, the system may do so automatically upon, for example, detecting that the GISO has completed a GISO questionnaire, detecting that multiple GISOs have completed their GISO questionnaire, or a pre-determined data. The results of the GISO surveys are used to calculate summary information security data and to generate the report. Such reports are referred to as "EVP reports."

In the embodiment shown, the CISO metrics program, which generates the EVP report, is run, for example, quarterly, although it can be run more frequently or less frequently. Each quarter, the EVP reports are sent to senior managers. The system organizes the data, performs certain calculations on the data, and generates decisions based on the responses. Certain items that may require attention are highlighted, for example, by presenting such items in red in the reports. Such items may be identified by the GISO on examination or by the system by, for example, automatically comparing the data in the report with pre-determined standards, earlier-collected data, or similar data.

An example information security report for the vice president is shown in FIG. 96. As can be seen, the report is a single page report capturing the information security status for the businesses areas for which the vice president is responsible. The report provides risks section data, for example the number of high-risk issues that were reported for the quarter of interest, the percentage of business units products that do not have information owners identified, the total number of security issues report for the quarter, and other information. The report also provides people management data, such as the name of the GISO responsible for the business areas reflected in the report. Also, the report provides information security gap analysis data, such as the year-to-date total approved information security deviations for the vice president's business units.

In an embodiment, a BISO or GISO survey form can be saved and returned to later. Also, in an embodiment, the BISO number and name fields must be filled in during the survey process, but all other fields are optional. However, since the system generates a BISO database according to general information fields on the survey forms, it is preferable to complete all fields. The first time a GISO or BISO uses a form, it is necessary to complete all the general information detail, including inapplicable fields, in which, for example, "N/A" can be entered. On subsequent uses of the form, the general information fields are automatically filled for the GISO or BISO, provided their number and associated names have not changed.

According to an embodiment of the present invention, data collection involves the CISO notifying the GISO community that it is time to gather information security metrics data, and in turn, the GISOs notify their BISOs. The BISOs are given sufficient time to gather their data, complete their survey forms, and return the forms to their GISOs. The GISOs then complete their questionnaires, and the EVP (executive vice president) report is generated.

The EVP report is run by each GISO at the culmination, for example, of each quarterly metrics program activity. The original of the EVP report is sent, for example, to an executive vice president of the organization, with a copy to the CISO. As the data has been gathered and stored, annual Wending reports regarding information security data are also available.

A networked computer system may be used to carried out the steps described above. For example, an embodiment of the present invention comprises a system for managing information security. The system may be made up of two or more computers (e.g., personal computers) making up a networked system. An example of such a system comprises an information security status data receiver associated with at least two levels of an organization. An example of such a receiver is a personal computer associated with the GISOs and BISOs. Such receivers may include a personal computer or other type of computer, a telephone, or other networked element. The receiver may comprise a network element associated with the levels of organization (e.g., computer or telephone). The system also includes a summary information security data calculator in communication with the information security status data receiver. This security data calculator may comprise the same computer, or be present therein. The calculator uses the data gathered to construct the data used for example in the BISO report. The system also includes an information security report generator in communication with the summary information security data calculator. The report generator generates, for example, the EVP report by using the data provided by the security data calculator.

Systems according to the present invention also include a system for evaluating an information security program, such as a anti-virus or other information security program used in an organization. FIG. 97 shows an example of such a system structure. The system includes first-level information security status data receivers 124, 126 associated with a first level of an organization. In the embodiment shown, the receivers 124, 126 are networked computers that are used by BISOs 24, 26 of the organization shown in FIG. 1. The network 115 includes network elements 124, 126 used by two BISOs 24, 26, respectively, a network element 122 (a computer) used by their supervising GISO 16, and a server 120 used by the CISO, which includes various computer files that the BISOs and GISOs may download to complete, for example, the information security surveys discussed above. The system also includes a first-level summary information security data calculator 124, 126 in communication with the first-level information security status data receiver 124, 126. In the embodiment shown, the calculator and receiver is made up of the same network element, a computer. In other embodiments, they may be separate. The calculator uses the data input by the BISOs to generate a data file including the status data provided by the BISO 24, 26. In another embodiment, the generator may comprise a personal computer used by a BISO to complete a BISO survey. Another example is a central network computer that receives data from multiple BISOs. The generator 124, 126 uses the data provided by the BISOs to calculate the data used to construct a BISO report. The system also includes a first-level information security report generator 122 in communication with the first-level summary information security data calculator 124, 126. The GISO's computer 122 may be used to generate the BISO report from data received from multiple BISOs 124, 126. Alternatively, an example is, again, a personal computer used by the BISO, which uses the data calculated to construct the BISO report.

The system also includes second-level elements. A second-level information security status data receiver 122 associated with a second level of the organization is included in the system. An example is a personal computer used by a GISO 16. The computer serves as a receiver of the security status data input by the GISO 16. As discussed above, in an embodiment, the GISO responds to a GISO questionnaire by inputting security status data. The system also includes a second-level summary information security data calculator in communication with the second-level information security status data receiver. An example is the GISO personal computer 122 which calculates summary data in accordance with the data provided by the GISO 16. The GISO's computer may calculate data needed to complete the EVP report. Mother example is a central networked computer 120 which calculates such data for the EVP report. The system also includes a second-level information security report generator in communication with the second-level summary information security data calculator. An example of such a report generator is the GISO computer 122, which may be used to generate an EVP report as described above. Another example of such a report generator is a networked computer at the CISO 120. The computer uses the summary data calculated to construct an EVP report.

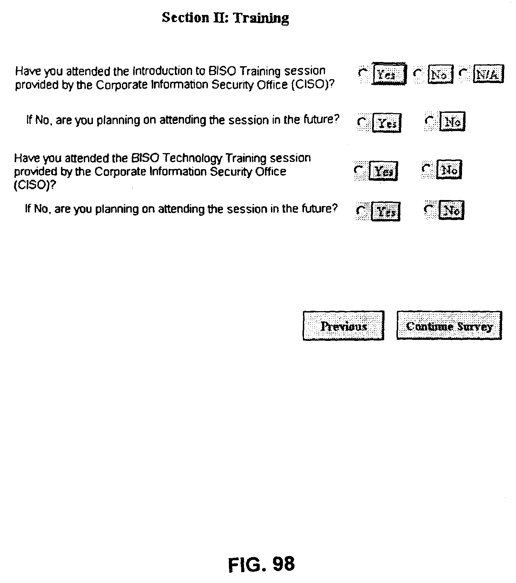

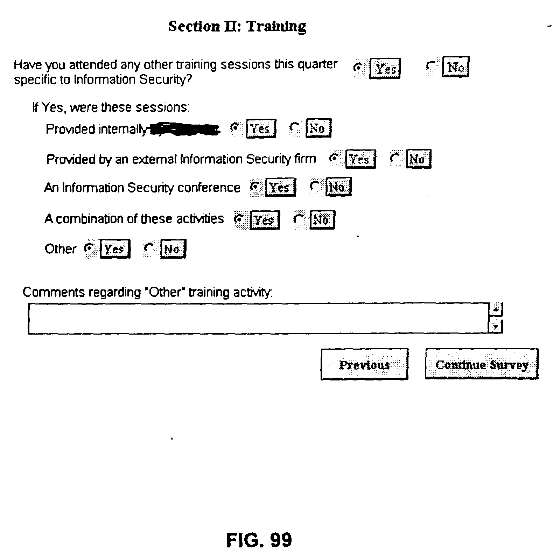

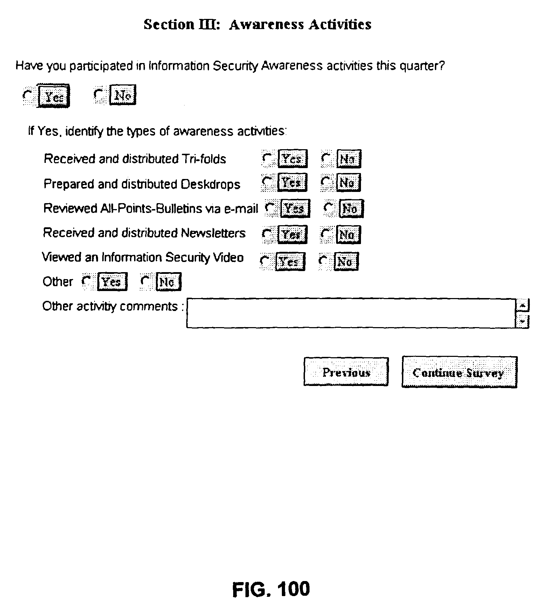

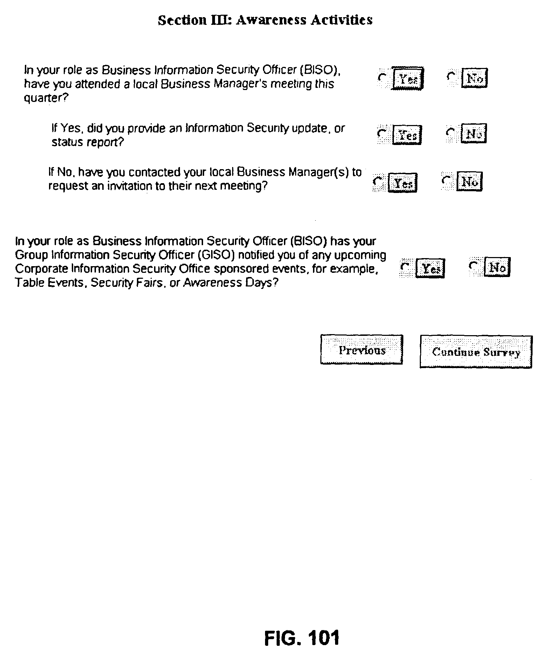

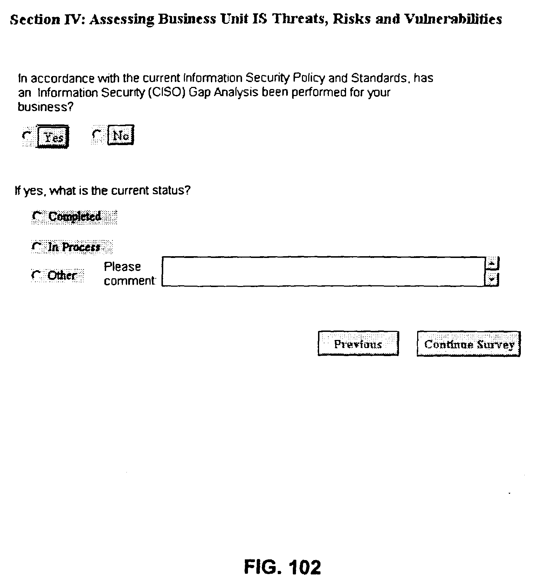

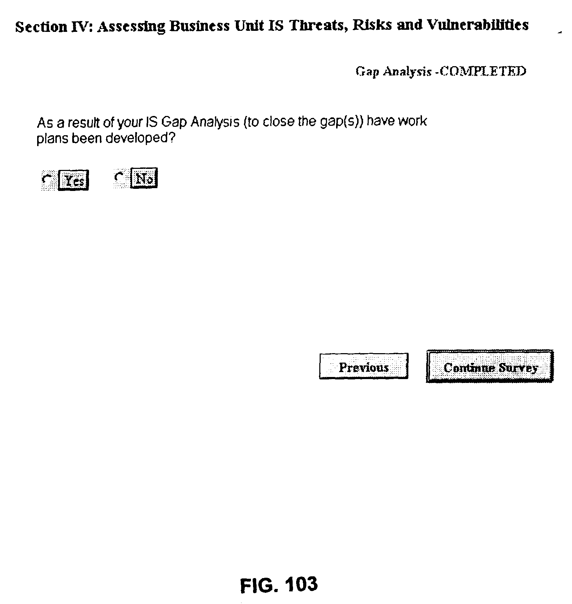

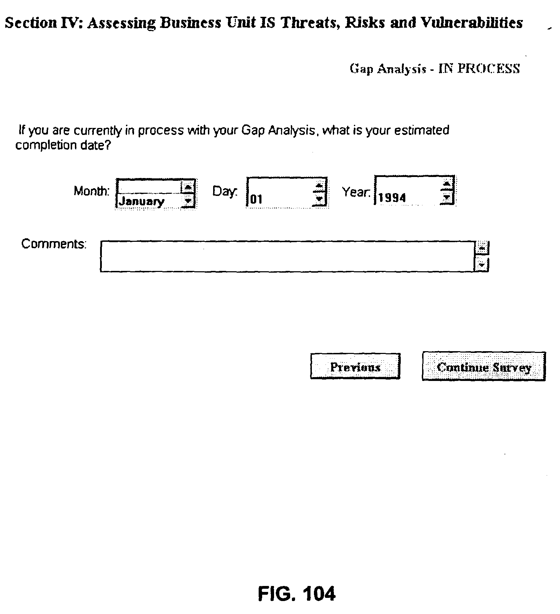

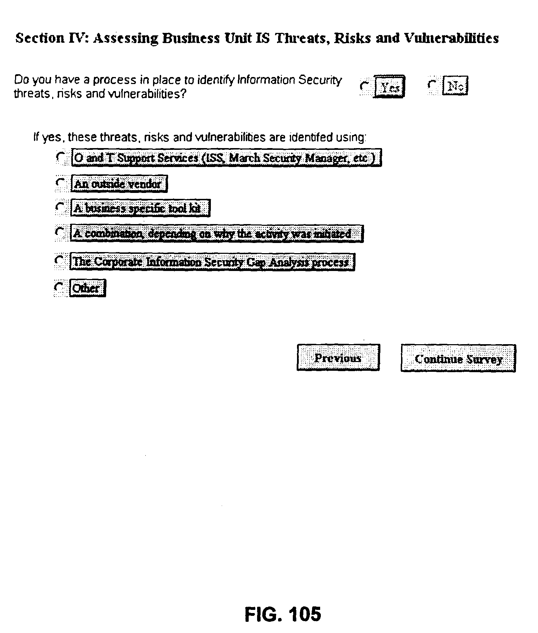

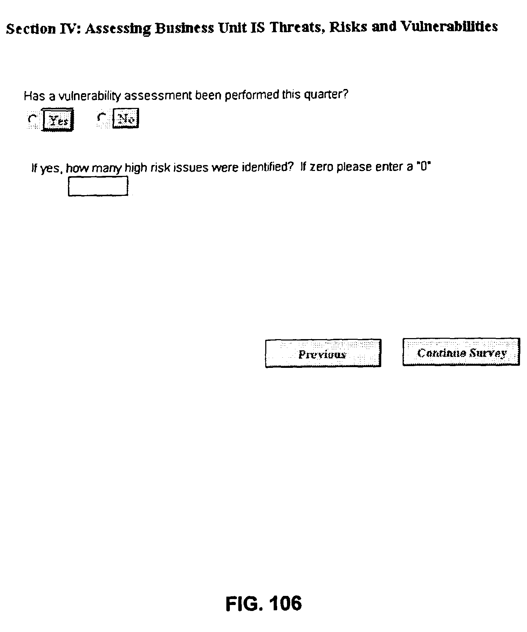

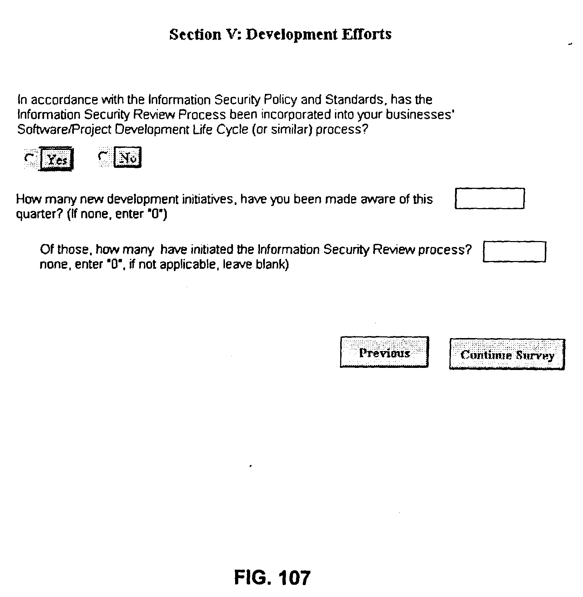

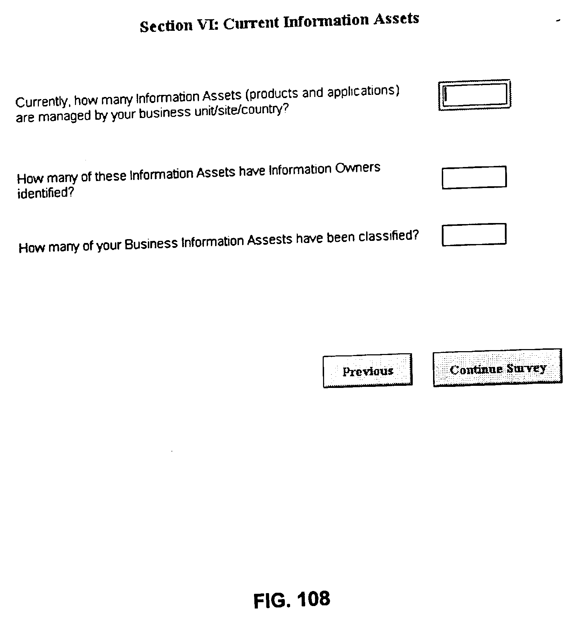

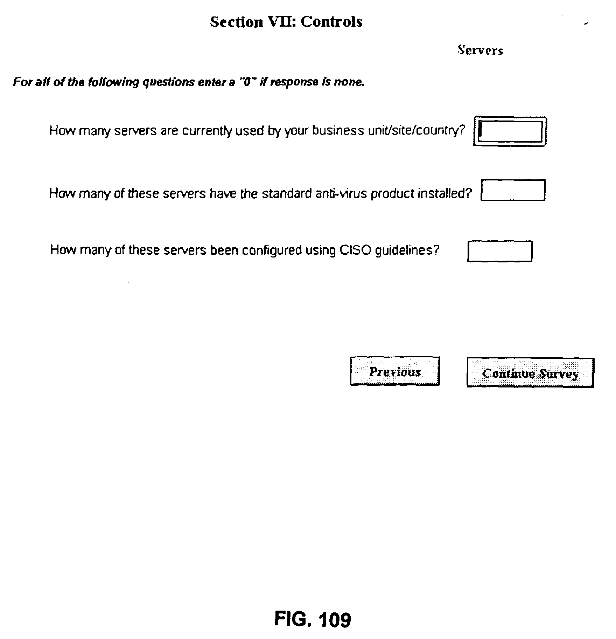

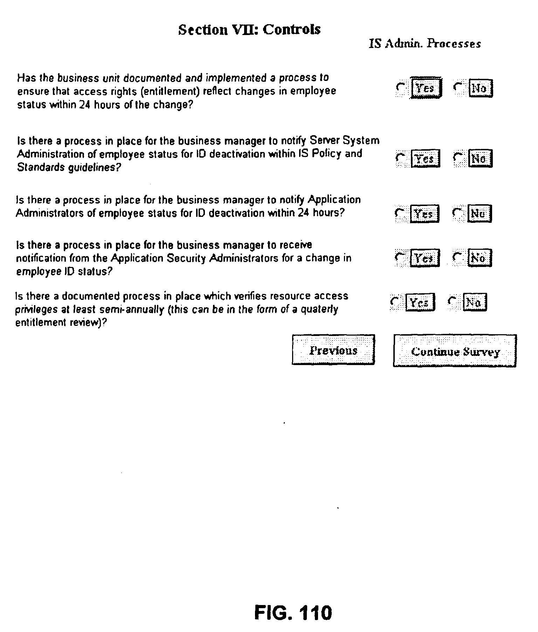

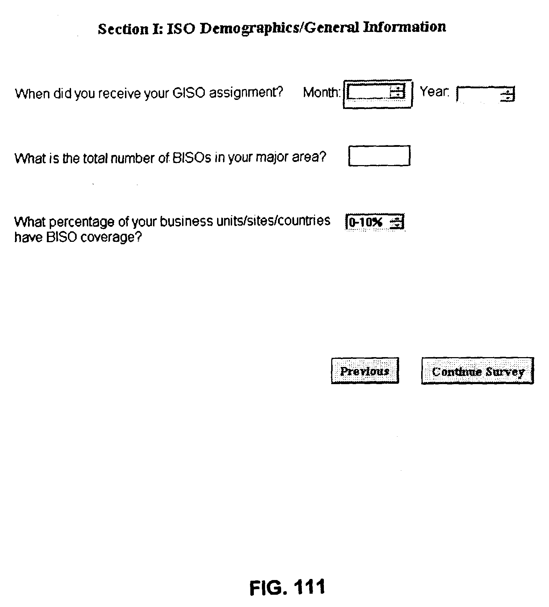

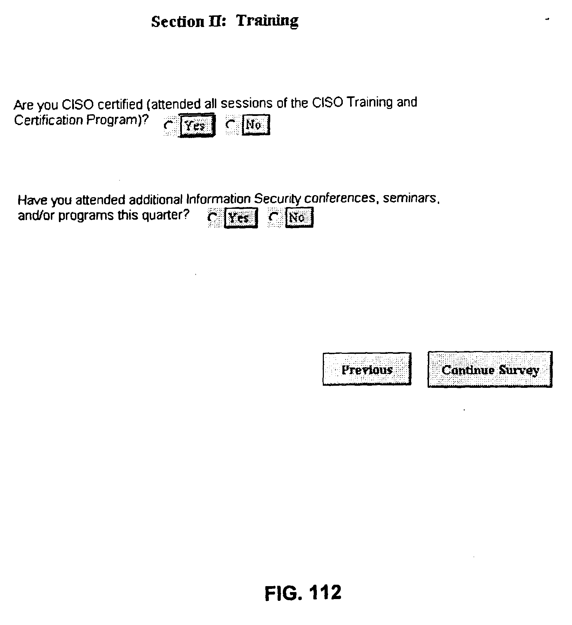

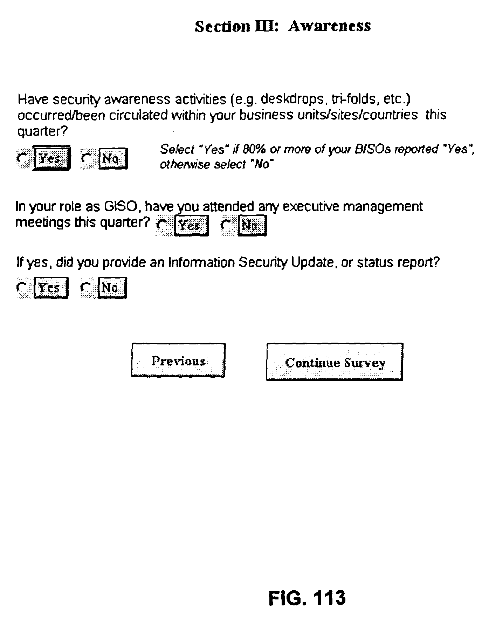

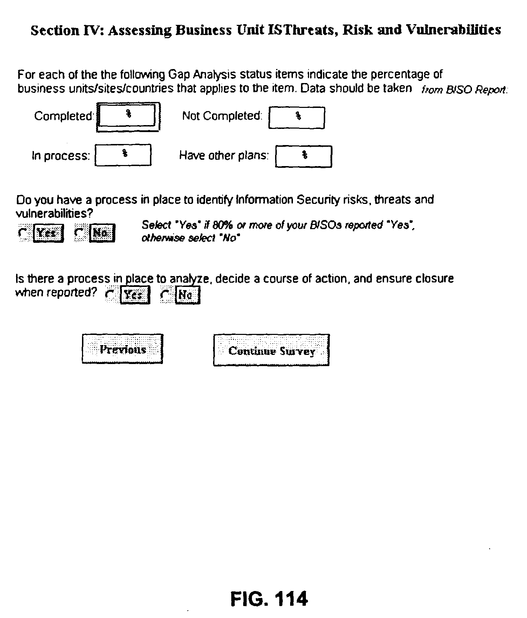

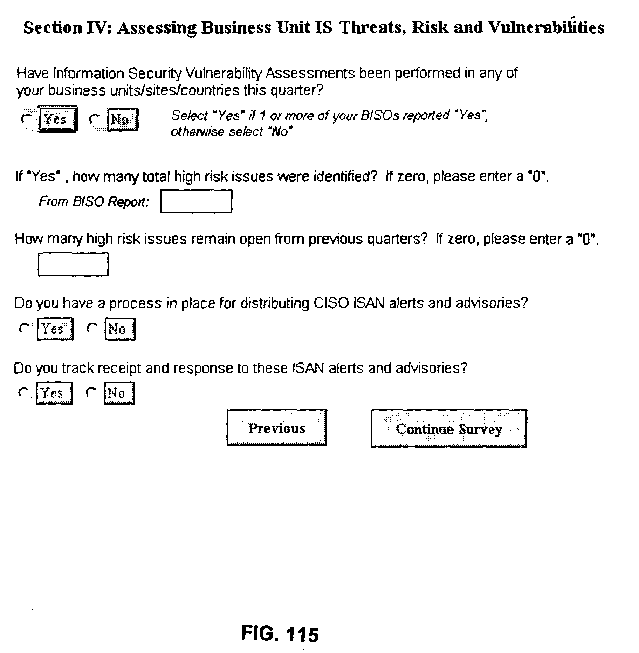

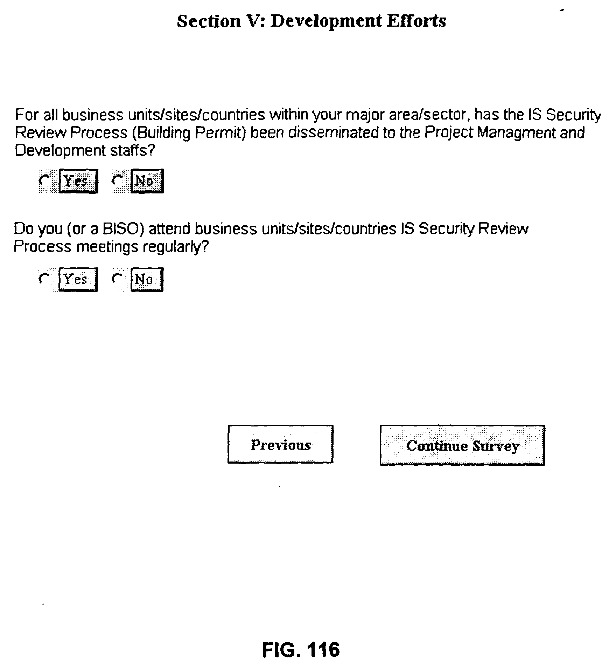

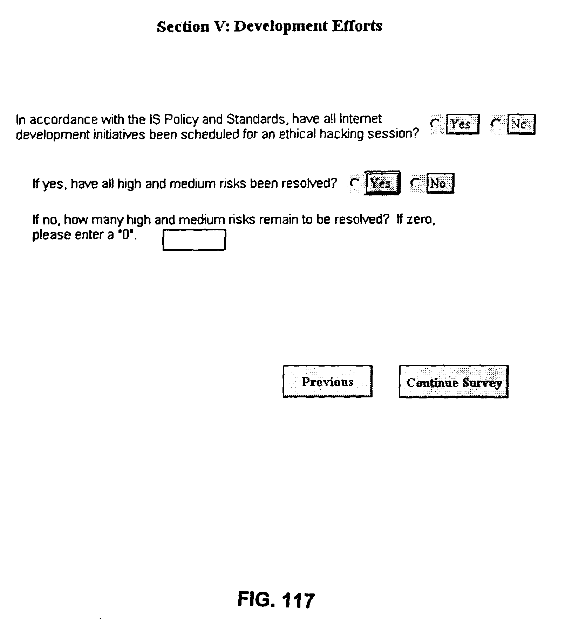

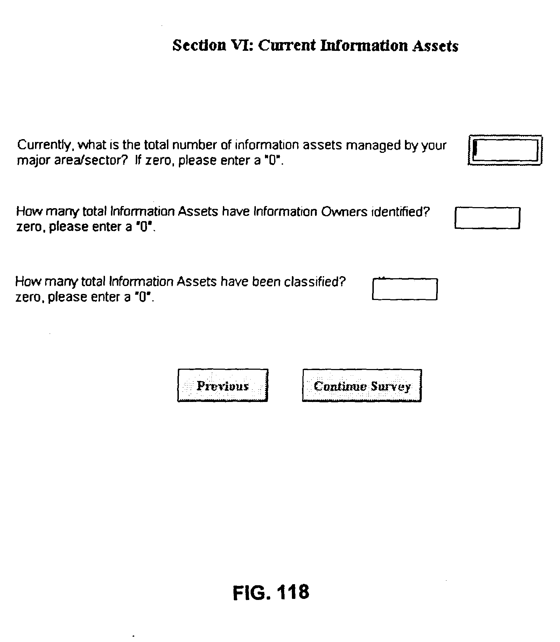

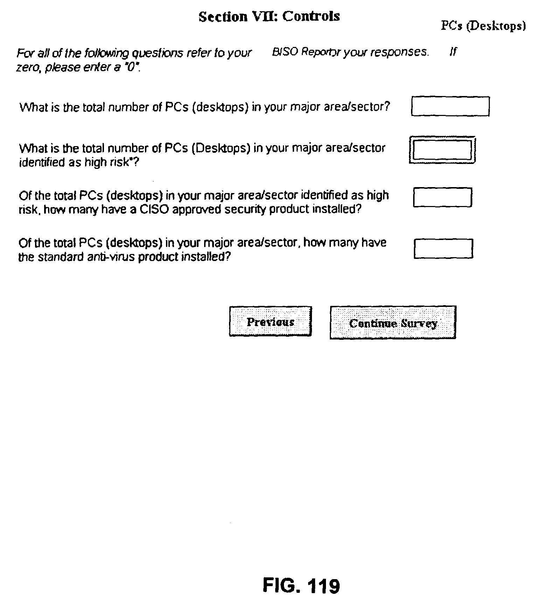

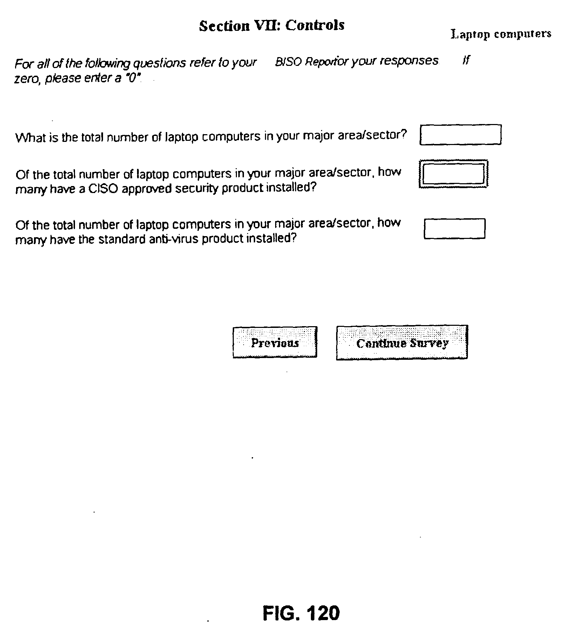

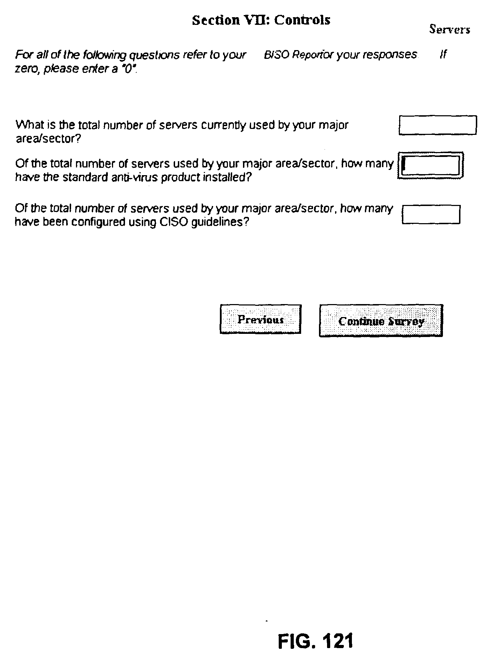

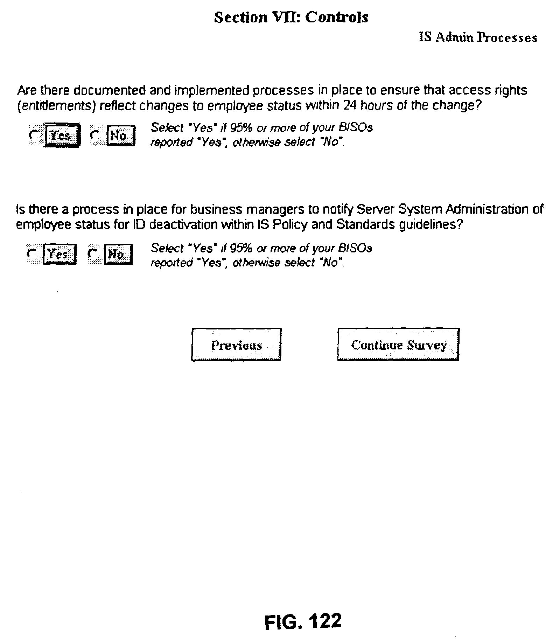

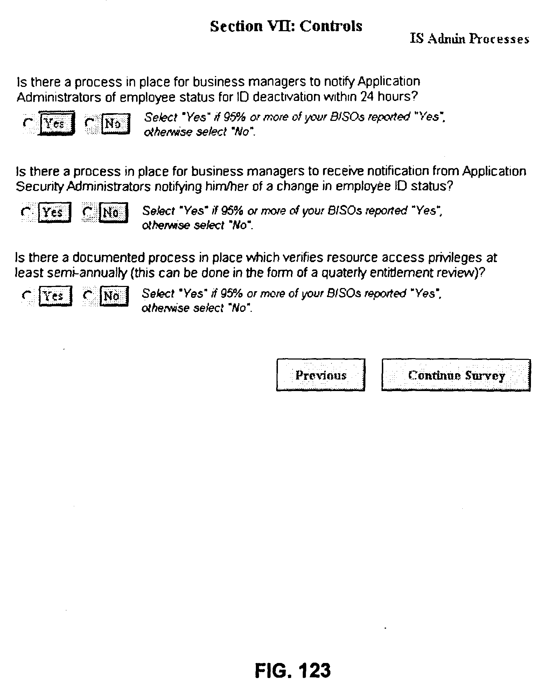

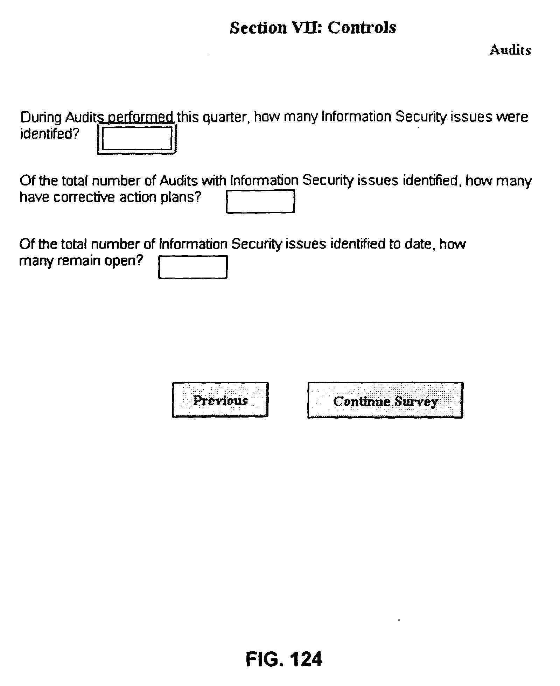

Another example of an embodiment of a system and method according to the present invention is shown in FIGS. 98-124. FIGS. 98-110 comprise pages from another embodiment of a BISO survey. FIGS. 111-124 comprise pages from another embodiment of a GISO questionnaire. The pages shown in FIGS. 98-124 comprise a refined embodiment of a BISO survey and a GISO questionnaire.

Various embodiments of the invention have been described in fulfillment of the various objects of the invention. It should be recognized that these embodiments are merely illustrative of the principles of the present invention. Numerous modifications and adaptations thereof will be apparent to those skilled in the art without departing from the spirit and scope of the present invention. Accordingly, the invention is only limited by the following claims.

## Claims

1. A method for managing information security, comprising:
a) receiving information security status data from at least two levels of an organization;
b) calculating summary information security data based on the information security status data from at least two levels of the organization; and
c) generating an information security report having summary information security data.

2. The method of claim 1 wherein receiving information security status data comprises conducting a survey.

3. The method of claim 1 wherein generating the information security report comprises determining people management data.

4. The method of claim 1 wherein generating the information security report comprises determining information security gap analysis data.

5. The method of claim 1 wherein generating the information security report comprises determining risks section data.

6. The method of claim 1 wherein receiving information security status data comprises receiving information security training data.

7. The method of claim 1 wherein receiving information security status data comprises receiving information security awareness data.

8. The method of claim 1 wherein receiving information security status data comprises receiving information security risk data.

9. The method of claim 1 wherein receiving information security status data comprises receiving information security vulnerability data.

10. The method of claim 1 wherein receiving information security status data comprises receiving information security control data.

11. The method of claim 1, further comprising reviewing the information security report for deficiencies in an information security program.

12. The method of claim 11, further comprising implementing information security measures to improve the information security program.

13. A method for evaluating an information security program, comprising:
a) receiving first-level information security status data from a network element associated with a first level of an organization;
b) calculating first-level summary information security data using the first-level information security status data;
c) generating a first-level information security report having first-level summary information security data;
d) receiving second-level information security status data from a network element associated with a second level of the organization, wherein at least part of the second-level information security status data comprises first-level summary information security data;
e) calculating second-level summary information security data using the second-level information security status data; and
f) generating a second-level information security report having summary information security data.

14. The method of claim 13 wherein receiving first-level information security status data comprises conducting a survey.

15. The method of claim 13 wherein receiving second-level information security status data comprises conducting a survey.

16. The method of claim 13 wherein generating the second-level information security report comprises determining people management data.

17. The method of claim 13 wherein generating the second-level information security report comprises determining information security gap analysis data.

18. The method of claim 13 wherein generating the second-level information security report comprises determining risks section data.

19. The method of claim 13 wherein receiving first-level information security status data comprises receiving information security training data.

20. The method of claim 13 wherein receiving first-level information security status data comprises receiving information security awareness data.

21. The method of claim 13 wherein receiving first-level information security status data comprises receiving information security risk data.

22. The method of claim 13 wherein receiving first-level information security status data comprises receiving information security vulnerability data.

23. The method of claim 13 wherein receiving first-level information security status data comprises receiving information security control data.

24. The method of claim 13, further comprising reviewing the second-level information security report for deficiencies in the information security program.

25. The method of claim 24, further comprising implementing information security measures to improve the information security program.

26. The method of claim 15 wherein the survey comprises a questionnaire.

27. A method for validating and measuring an effectiveness of at least one information security program of an organization having a plurality of business levels, comprising
distributing a first survey form to a first one of the plurality of business levels in the organization;
the first business level completing the first survey form indicative of a degree of implementation of the at least one information security program;
generating a first database report summarizing data accumulated from the completed first survey form;
distributing a second survey form to a second one of the plurality of business levels in the organization;
the second business level completing the second survey form based on data provided by the second business level and data accumulated form the completed first survey form;
generating a second database report summarizing data accumulated from the completed second survey form; and
determining the effectiveness of the at least one information security programs based on at least on the second database report.

28. A system for managing information security, comprising:
an information security status data receiver associated with at least two levels of an organization;
summary information security data calculator in communication with the information security status data receiver; and
an information security report generator in communication with the summary information security data calculator.

29. The system of claim 28 wherein the information security status data receiver comprises network elements associated with at least two levels of an organization.

30. A system for evaluating an information security program, comprising:
a first-level information security status data receiver associated with a first level of an organization;
a first-level summary information security data calculator in communication with the first-level information security status data receiver;
a first-level information security report generator in communication with the first-level summary information security data calculator;
a second-level information security status data receiver associated with a second level of the organization;
a second-level summary information security data calculator in communication with the second-level information security status data receiver; and
a second-level information security report generator in communication with the second-level summary information security data calculator.

31. The system of claim 30 wherein the first-level information security status data receiver comprises a first network element associated with a first level of the organization.

32. The system of claim 31 wherein the second-level information security status data receiver comprises a second network element associated with a second level of the organization.

33. The system of claim 32 wherein the first network element is a personal computer.

34. The system of claim 33 wherein the second network element is a personal computer.
